(19) Europäisches Patentamt
European Patent Office
Office européen des brevets

(11) EP 3 438 134 B1

(12) EUROPEAN PATENT SPECIFICATION

(45) Date of publication and mention of the grant of the patent:
**05.05.2021 Bulletin 2021/18**

(21) Application number: **17775235.9**

(22) Date of filing: **29.03.2017**

(51) Int Cl.:
***C08F 2/44*** (2006.01)
***G02B 5/30*** (2006.01)
***G02F 1/13*** (2006.01)
***G02F 1/1335*** (2006.01)
***G02F 1/13363*** (2006.01)
***G02F 1/1337*** (2006.01)
***G09F 9/00*** (2006.01)
***C09K 19/54*** (2006.01)
***C09K 19/04*** (2006.01)

(86) International application number:
**PCT/JP2017/012919**

(87) International publication number:
**WO 2017/170701 (05.10.2017 Gazette 2017/40)**

(54) **POLYMERIZABLE COMPOSITION, CURED OBJECT, OPTICAL FILM FOR DISPLAY, AND PROCESS FOR PRODUCING CURED OBJECT**

POLYMERISIERBARE ZUSAMMENSETZUNG, GEHÄRTETER GEGENSTAND, OPTISCHE FOLIE ZUR ANZEIGE UND VERFAHREN ZUR HERSTELLUNG EINES GEHÄRTETEN GEGENSTANDES

COMPOSITION POLYMÉRISABLE, OBJET DURCI, FILM OPTIQUE POUR AFFICHAGE ET PROCÉDÉ DE PRODUCTION D'UN OBJET DURCI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2016 JP 2016069227**

(43) Date of publication of application:
**06.02.2019 Bulletin 2019/06**

(73) Proprietor: **Adeka Corporation**
**Tokyo 116-8554 (JP)**

(72) Inventors:
- **MIHARA, Taiki**
**Tokyo 116-8554 (JP)**
- **MIYAKE, Junya**
**Tokyo 116-8554 (JP)**
- **SATO, Naomi**
**Tokyo 116-8554 (JP)**

(74) Representative: **Forstmeyer, Dietmar**
**BOETERS & LIECK**
**Oberanger 32**
**80331 München (DE)**

(56) References cited:
**EP-A1- 2 399 942**
**WO-A1-2009/104468**
**WO-A1-2015/133331**
**WO-A1-2015/152153**
**JP-A- 2009 029 929**
**JP-A- 2011 132 215**
**JP-A- 2012 236 982**
**JP-A- 2015 093 842**
**JP-A- 2015 110 728**
**JP-A- 2015 127 793**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 438 134 B1

**Description**

Technical Field

This invention relates to a polymerizable composition containing a liquid crystal compound having a polymerizable functional group (hereinafter also referred to as a polymerizable liquid crystal compound) and a radical polymerization initiator, more particularly, a polymerizable composition containing a polymerizable liquid crystal compound having an optionally halogen-substituted acryl or methacryl group as a polymerizable group and a compound having an oxime ester group and an indole structure. The polymerizable composition of the invention is excellent in solvent solubility and alignment control properties. A cured product obtained by polymerization of the polymerizable composition of the invention is excellent in alignment retention properties and transparency and useful as optical films for displays as typified by retardation films, polarizing films, and polarizing prisms.

Background Art

Liquid crystals have been applied to display media in which the reversible movement of liquid crystal molecules is made use of, such as display devices typically of TN or STN mode. Besides the application to display media, liquid crystals have recently been studied for applicability to optically anisotropic elements, such as a retardation film, a polarizing film, a polarizing prism, and various optical filters, taking advantage of their anisotropy in physical properties, such as refractive index, dielectric constant, and magnetic susceptibility, as well as their alignment properties.

In order for an optically anisotropic element composed of a liquid crystal compound to stably exhibit uniform optical characteristics, it is necessary to semi-permanently fix the uniform alignment state of the liquid crystal molecules in a liquid crystal state to produce a cured product with good alignment that is mechanically and thermally stable and has a high glass transition temperature (Tg).

Known means for semi-permanently fixing the uniform alignment of liquid crystal molecules in a liquid crystal state include a method comprising the steps of uniformly aligning the molecules of a polymerizable liquid crystal compound or a composition containing the same in a liquid crystal state and irradiating the compound or the composition while being in the liquid crystal state with energy rays, such as ultraviolet rays, to cause photopolymerization.

When a polymerizable composition is applied to a substrate and polymerized to give a cured product, it is preferred to apply a solution of the polymerizable composition in a solvent, in order to obtain a cured product with a uniform film thickness. If the polymerizable composition is solvent-insoluble, the liquid crystal compound would have great difficulty in alignment control. Therefore, the polymerizable composition is required to have good solvent solubility.

A polymerizable liquid crystal material is usually polymerized in the presence of a polymerization initiator that induces polymerization on being irradiated with energy rays, such as UV rays. To illustrate, Patent Literature 1 below shows a composition containing an acylphosphine oxide compound as an initiator. Patent Literatures 2 and 3 below disclose compositions containing various oxime ester compounds as an initiator. Patent Literature 4 below discloses a polymerizable composition containing a polymerizable liquid crystal compound and a radical polymerization initiator, and also discloses an oxime ester compound having a carbazole structure as the photopolymerization initiator.

Citation List

Patent Literature

Patent Literature 1: JP 2002-69450A
Patent Literature 2: JP 2003-315761A
Patent Literature 3: JP 2007-2065A
Patent Literature 4: JP 2009-029929A

EP 2 399 942 A1 discloses a polymerizable liquid crystal composition used for the production of optical compensation films such as liquid crystal displays. JP 2015 110728 A discloses a polymerizable liquid crystal composition containing an optically active compound having a binaphthol moiety, an achiral polymerizable liquid crystal compound and a photopolymerization initiator having an oxime ester.

JP 2015 127793 A discloses a positive uniaxial retardation film that is composed by combining bifunctional polymerizable liquid crystal compounds, and a negative uniaxial retardation film that is composed by combining a bi functional polymerizable liquid crystal compound and an optical active compound having a polymerizable binaphthol portion. JP 2012 236982 A discloses a polymerizable composition that is excellent in curability, and a cured material

that is excellent in transparency and heat resistance. WO 2015/152153 A1 discloses an oxime ester compound and a photopolymerization initiator containing said compound.

Summary of Invention

However, use of the radical polymerization initiators described in Patent Literatures 1 to 4 has turned out to be faced with such problems as crystal precipitation during polymerization, yellowing of a cured product, and difficulty in alignment control. The problem with the polymerizable composition described in Patent Literature 4 is that a cured product obtained therefrom through photopolymerization has poor transparency.

The problem the present invention aims to solve is that there is no available polymerizable composition having excellent curing properties and providing a cured product excellent in alignment retention, heat resistance, and transparency.

An object of the invention is to provide a polymerizable composition having excellent curing properties and providing a cured product excellent in alignment retention, heat resistance, and transparency.

The present invention provides a polymerizable composition including:

(A) a compound represented by general formula (I) below and

(B) at least one compound having an indole structure and an oxime ester group represented by general formula (III) below:

[Chem. 1]

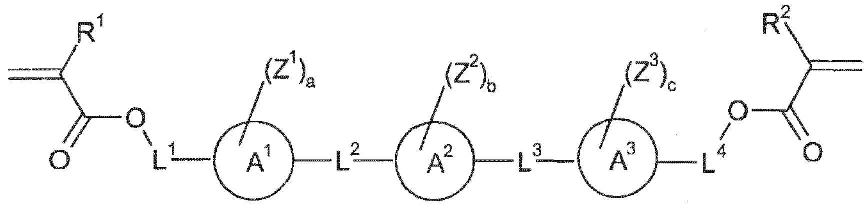

(I)

wherein $R^1$ and $R^2$ each independently represent a hydrogen atom, a methyl group, or a halogen atom;

ring $A^1$, ring $A^2$, and ring $A^3$ each independently represent a benzene ring, a cyclohexane ring, a cyclohexene ring, a naphthalene ring, or a phenanthrene ring, the -CH= moiety of each of these rings being optionally replaced by -N=, and the methylene moiety of each of these rings being optionally replaced by -S- or -O-;

$Z^1$, $Z^2$, and $Z^3$ each independently represent a cyano group, a halogen atom, or a C1-C8 alkyl group, the hydrogen atom of the alkyl group being optionally replaced by a halogen atom or a cyano group, and the methylene moiety of the alkyl group being optionally replaced by -O- or -CO- provided that no two oxygen atoms are directly connected to each other;

$L^1$ and $L^2$ each independently represent a direct bond, -COO-, $-(CE_2)_p-$, -CE=CE-, $-(CE_2)_pO-$, $-CE=CECE_2O-$, -C≡C-, $-(CE_2)_pCOO-$, $-(CE_2)_pOCO-O-$, or $-(CE_2)_qO(CE_2)_rO-$; $L^3$ and $L^4$ each independently represent a direct bond, -OCO-, $-(CE_2)_p-$, -CE=CE-, $-O(CE_2)_p-$, $-OCE_2CE=CE-$, -C≡C-, $-OCO(CE_2)_p-$, $-OCO-O(CE_2)_p-$, or $-O(CE_2)_qO(CE_2)_r-$, wherein E in $L^1$ and $L^4$ represents a hydrogen atom, a methyl group, or an ethyl group; E in $L^2$ and $L^3$ represents a hydrogen atom; and the plurality of E's are the same or different from each other;

a, b, and c are the numbers of the substituents on ring $A^1$, $A^2$, and $A^3$, respectively, each independently representing an integer of 0 to (2t + 2), wherein t is the number of 6-membered rings contained in the substituted monocyclic or fused ring, provided that b is 1 or greater;

p represents an integer of 1 to 8; and

q and r each independently represent an integer of 1 to 3;

[Chem. 3]

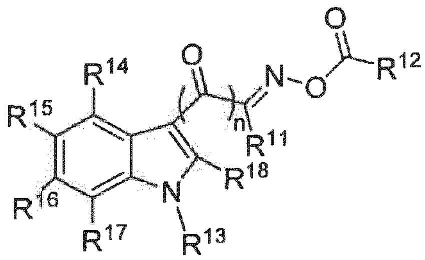

(III)

wherein $R^{11}$ and $R^{12}$ each independently represent $R^{21}$, $OR^{21}$, $COR^{21}$, $SR^{21}$, $CONR^{22}R^{23}$, or CN;
$R^{21}$, $R^{22}$, and $R^{23}$ each independently represent a hydrogen atom, a C1-C30 hydrocarbon group, or a C2-C20 group containing a heterocyclic ring, the hydrogen atom of the groups $R^{21}$, $R^{22}$, and $R^{23}$ being optionally replaced by $R^{31}$, $OR^{31}$, $COR^{31}$, $SR^{31}$, $NR^{32}R^{33}$, $CONR^{32}R^{33}$, $-NR^{32}-OR^{33}$, $-NCOR^{32}-OCOR^{33}$, $NR^{32}COR^{31}$, $OCOR^{31}$, $SCOR^{31}$, $OCSR^{31}$, $COSR^{31}$, $CSOR^{31}$, a hydroxy group, a nitro group, CN, a halogen atom, or $COOR^{31}$;
$R^{31}$, $R^{32}$, and $R^{33}$ each independently represent a hydrogen atom, a C1-C30 hydrocarbon group, or a C2-C20 group containing a heterocyclic ring, the hydrogen atom of the groups $R^{31}$, $R^{32}$, $R^{33}$ being optionally replaced by a hydroxy group, a nitro group, CN, a halogen atom, or a carboxyl group, and the methylene moiety of the groups $R^{21}$, $R^{22}$, $R^{23}$, $R^{31}$, $R^{32}$, and $R^{33}$ being optionally replaced by -O-, -S-, -COO-, -OCO-, $-NR^{34}-$, $-NR^{34}COO-$, $-OCONR^{34}-$, -SCO-, -COS-, -OCS-, or -CSO- provided that no two oxygen atoms are directly connected to each other;
$R^{34}$ represents a hydrogen atom, a C1-C30 hydrocarbon group, or a C2-C20 group containing a heterocyclic ring;
$R^{13}$ represents a hydrogen atom, a C1-C30 hydrocarbon group, or a C2-C20 group containing a heterocyclic ring, the combination of $R^{13}$ and $R^{17}$, the combination of $R^{13}$ and $R^{18}$, the combination of $R^{14}$ and $R^{15}$, the combination of $R^{15}$ and $R^{16}$, and the combination of $R^{16}$ and $R^{17}$ each, taken together, optionally forming a ring, and the hydrogen atom of the group $R^{13}$ being optionally replaced by $R^{31}$, $OR^{31}$, $COR^{31}$, $SR^{31}$, $NR^{32}R^{33}$, $CONR^{32}R^{33}$, $-NR^{32}-OR^{33}$, $-NCOR^{32}-OCOR^{33}$, $NR^{32}COR^{31}$, $OCOR^{31}$, $SCOR^{31}$, $OCSR^{31}$, $COSR^{31}$, $CSOR^{31}$, a hydroxy group, a nitro group, CN, a halogen atom, or $COOR^{31}$;
$R^{14}$, $R^{15}$, $R^{16}$, and $R^{17}$ each independently represent $R^{21}$, $OR^{21}$, $SR^{21}$, $COR^{24}$, $CONR^{25}R^{26}$, $NR^{22}COR^{21}$, $OCOR^{21}$, $COOR^{24}$, $SCOR^{21}$, $OCSR^{21}$, $COSR^{24}$, $CSOR^{21}$, a hydroxy group, CN, or a halogen atom;
$R^{24}$, $R^{25}$, and $R^{26}$ each independently represent a hydrogen atom or a C1-C20 alkyl group;
$R^{18}$ represents $R^{21}$, $OR^{21}$, $SR^{21}$, $COR^{21}$, $CONR^{22}R^{23}$, $NR^{22}COR^{21}$, $OCOR^{21}$, $COOR^{21}$, $SCOR^{21}$, $OCSR^{21}$, $COSR^{21}$, $CSOR^{21}$, a hydroxy group, CN, or a halogen atom; and
n represents 0 or 1.

The present invention also provides the above-mentioned polymerizable composition, wherein compound (A) is a compound represented by general formula (II).

[Chem. 2]

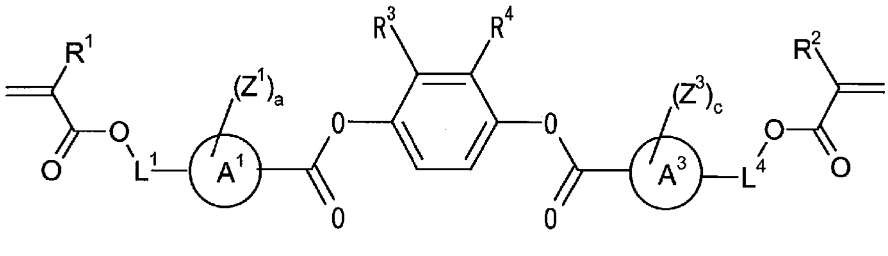

(II)

wherein $R^1$, $R^2$, $L^1$, $L^4$, ring $A^1$, ring $A^3$, $Z^1$, $Z^3$, a, and c are as defined in claim 1;
$R^3$ and $R^4$ each independently represent a hydrogen atom, a halogen atom, a cyano group, or a C1-C8 alkyl group provided that at least one of $R^3$ and $R^4$ is a substituent other than a hydrogen atom, the hydrogen atom of the alkyl group being optionally replaced by a halogen atom or a cyano group, and the methylene moiety of the alkyl group being optionally replaced by -O- or -CO- provided that no two oxygen atoms are directly connected to each other.

The present invention also provides the above-mentioned polymerizable composition, wherein compound (A) satisfies at least one of conditions (a) and (b) below:

Condition (a): $L^1$ is a group represented by $-(CH_2)_p-$, $-CH=CH-$, $-(CH_2)_pO-$, $-CH=CHCH_2O-$, $-(CH_2)_pCOO-$, $-(CH_2)_pOCO-O-$, or $-(CH_2)_qO(CH_2)_rO-$,

Condition (b): $L^4$ is a group represented by $-(CH_2)_p-$, $-CH=CH-$, $-O(CH_2)_p-$, $-OCH_{2C}H=CH-$, $-OCO(CH_2)_p-$, $-OCO-O(CH_2)_p-$, or $-O(CH_2)_qO(CH_2)_r-$,

wherein p represents an integer of 1 to 8; and q and r each independently represent an integer ofl to 3.

The present invention also provides the above-mentioned polymerizable composition, wherein ring $A^1$ and ring $A^3$ in compound (A) each independently represent a benzene ring or a naphthalene ring.

The present invention also provides the above-mentioned polymerizable composition, further comprising an optically active compound.

The present invention also provides a method for producing a cured product, comprising using the above-mentioned polymerizable composition.

The present invention also provides a cured product obtained from the above-mentioned polymerizable composition, and an optical film for displays including the above mentioned cured product.

Description of Embodiments

The polymerizable composition of the invention will be described in detail on the basis of its preferred embodiments.

I. Compound (A)

Compound (A) used in the polymerizable composition of the invention is represented by general formula (I) shown above.

In general formulae (I) and (II), $L^1$, $L^2$, $L^3$, and $L^4$ each independently represent a direct bond, -COO-, -OCO-, $-(CE_2)_p-$, -CE=CE-, $-(CE_2)_pO-$, $-O(CE_2)_p-$, $-CE=CECE_2O-$, $-OCE_2CE=CE-$, -C≡C-, $-(CE_2)_pCOO-$, $-OCO(CE_2)_p-$, $-(CE_2)_pOCO-O-$, $-OCO-O(CE_2)_p-$, $-(CE_2)_qO(CE_2)_rO-$, or $-O(CE_2)_qO(CE_2)_r-$, wherein E in the groups $L^1$ and $L^4$ is hydrogen, methyl, or ethyl, and E in the groups $L^2$ and $L^3$ is hydrogen. The plurality of E's may be the same or different. The subscripts a, b, and c are the numbers of the substituents on ring $A^1$, $A^2$, and $A^3$, respectively, each independently representing an integer of 0 to (2t + 2), wherein t is the number of 6-membered rings contained in the substituted monocyclic or fused ring, provided that b is 1 or greater. The subscript p independently represents an integer of 1 to 8; and q and r each independently represent an integer of 1 to 3.

$L^1$ is preferably a direct bond, $-(CE_2)_p-$, -CE=CE-, $-(CE_2)_pO-$, $-CE=CECE_2O-$, -C≡C-, $-(CE_2)_pCOO-$, $-(CE_2)_pOCO-O-$, or $-(CE_2)_qO(CE_2)_rO-$. $L^4$ is preferably a direct bond, $-(CE_2)_p-$, -CE=CE-, $-O(CE_2)_p-$, $-OCE_2CE=CE-$,-C≡C-, $-OCO(CE_2)_p-$, $-OCO-O(CE_2)_p-$, or $-O(CE_2)_qO(CE_2)_r-$.

It is particularly preferred that the compound represented by formula (I) or (II) satisfy one or both of conditions (a) and (b) described below so that a liquid crystal phase may develop in a broad temperature range to achieve uniform liquid crystal alignment.

Condition (a): $L^1$ is a group represented by $-(CH_2)_p-$, $-CH=CH-$, $-(CH_2)_pO-$, $-CH=CHCH_2O-$, $-(CH_2)_pCOO-$, $-(CH_2)_pOCO-O-$, or $-(CH_2)_qO(CH_2)_rO-$.

Condition (b): $L^4$ is a group represented by $-(CH_2)_p-$, $-CH=CH-$, $-O(CH_2)_p-$, $-OCH_2CH=CH-$, $-OCO(CH_2)_p-$, $-OCO-O(CH_2)_p-$, or $-O(CH_2)_qO(CH_2)_r-$.

$L^1$ and $L^4$ may be symmetric or asymmetric. When they are symmetric, they can be, for example, a direct bond, or $L^1$ can be $-(CH_2)_pO-$, while $L^4$ is $-O(CH_2)_p-$ wherein p in $L^1$ and that in $L^4$ are the same. Likewise, $L^2$ and $L^3$ may be symmetric or asymmetric.

In formulae (I) and (II), examples of the halogen atom represented by $R^1$, $R^2$, $Z^1$, $Z^2$, and $Z^3$ include fluorine, chlorine, bromine, and iodine. For $Z^1$, $Z^2$, $Z^3$, $R^3$, and $R^4$, examples of the C1-C8 alkyl group optionally substituted with halogen or cyano include methyl, ethyl, propyl, isopropyl, butyl, s-butyl, t-butyl, isobutyl, amyl, isoamyl, t-amyl, hexyl, cyclohexyl, heptyl, isoheptyl, t-heptyl, n-octyl, isooctyl, t-octyl, 2-ethylhexyl, chloromethyl, dichloromethyl, trichloromethyl, trifluoromethyl, pentafluoroethyl, and cyanomethyl. The methylene moiety of the alkyl group is optionally replaced by -O- or -CO-. Examples of the alkyl group the methylene moiety of which is replaced by -O- or -CO- include acetyl, acetonyl, butan-2-on-1-yl, butan-3-on-1-yl, cyclohexan-4-on-1-yl, trichloroacetyl, trifluoroacetyl, methoxy, ethoxy, propoxy, isopropoxy, butoxy, s-butoxy, t-butoxy, isobutoxy, amyloxy, isoamyloxy, t-amyloxy, hexyloxy, cyclohexyloxy, heptyloxy, isoheptyloxy, t-heptyloxy, n-octyloxy, isooctyloxy, t-octyloxy, 2-ethylhexyloxy, chloromethoxy, dichloromethoxy, trichloromethoxy, trifluoromethoxy, pentafluoroethoxy, 2-hydroxyethoxy, 2-methyl-2-hydroxyethoxy, 1-methyl-2-hydroxyethoxy, 3-hydroxypropoxy, 2-(2-hydroxyethoxy)ethoxy, 2-methoxyethoxy, 2-butoxyethoxy, 2-methyl-2-methoxyethoxy,

1-methyl-2-methoxyethoxy, 3-methoxypropoxy, and 2-(2-methoxyethoxy)ethoxy. Examples of the halogen atom with which the C1-C8 alkyl group may be substituted include fluorine, chlorine, bromine, and iodine.

Beneficial among compounds (A) of formula (I) are those showing a liquid crystal phase at a specific temperature or those the polymers of which show a liquid crystal phase at a specific temperature because, when used in polymerizable compositions, they provide cured products with good molecular alignment. It is preferred for compound (A) to exhibit a liquid crystal phase at least at or near room temperature, specifically at 30°C or lower, more preferably at 25°C or lower, in the interests of processability in the production of a cured product from the polymerizable composition of the invention. It is preferred for compound (A) to exhibit a liquid crystal phase at any temperature below the above upper limit. Whether compound (A) exhibits a liquid crystal phase may be examined through polarization microscopy, differential scanning calorimetry, X-ray diffractometry, or the like.

Of compounds (A) of formula (I), those of formula (II) are preferred in terms of liquid crystal properties, solvent solubility, and compatibility with other liquid crystal compounds.

Of compounds (A) of formulae (I) and (II), preferred are those in which all the E's are hydrogen because of their broad liquid crystal temperature range.

Of compounds (A) of formulae (I) and (II), those in which ring $A^1$ and ring $A^3$ are each a benzene or naphthalene ring are preferred in terms of ease of synthesis, alignment properties, and solvent solubility. Those in which at least one of ring $A^1$ and ring $A^3$ is a naphthalene ring are particularly preferred in terms of heat resistance as well as the above described properties.

Of compounds (A) of formulae (I) and (II), preferred are those in which $R^1$ and $R^2$ are each hydrogen or methyl in terms of ease of preparation and curability of the resulting polymerizable composition.

Specific examples of compounds (A) used in the polymerizable composition of the invention include, but are not limited to, compound Nos. 1 through 30 shown below.

[Chem. 6]

Compound No. 1

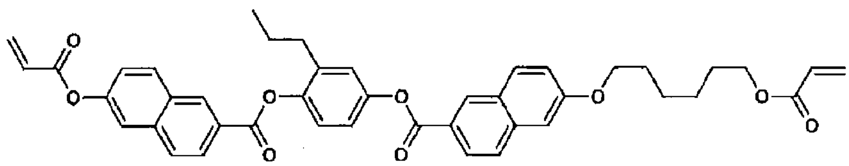

[Chem. 7]

Compound No. 2

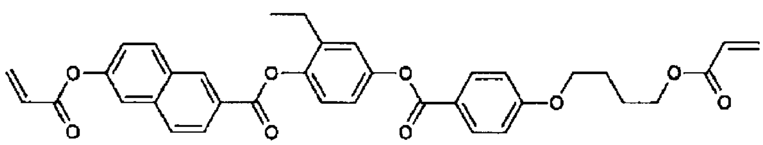

[Chem. 8]

Compound No. 3

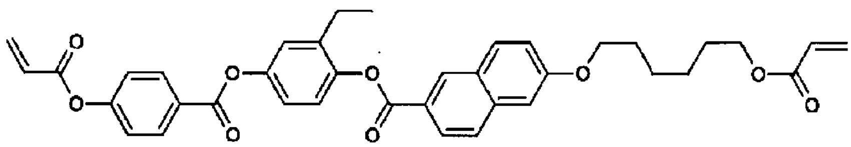

[Chem. 9]

Compound No. 4

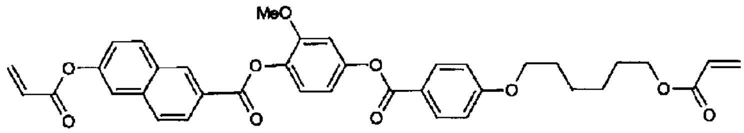

[Chem. 10]

Compound No. 5

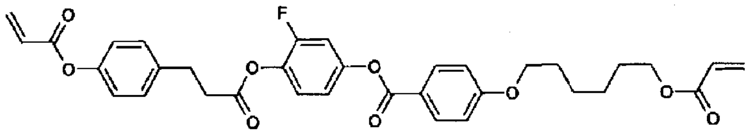

[Chem. 11]

Compound No. 6

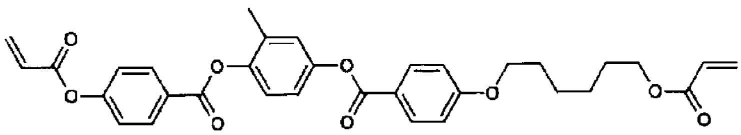

[Chem. 12]

Compound No. 7

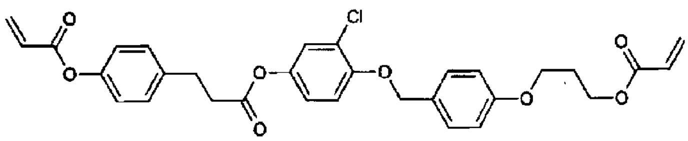

[Chem. 13]

Compound No. 8

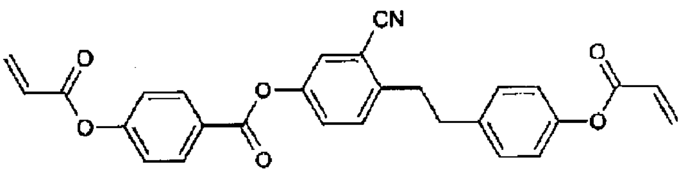

[Chem. 14]

Compound No. 9

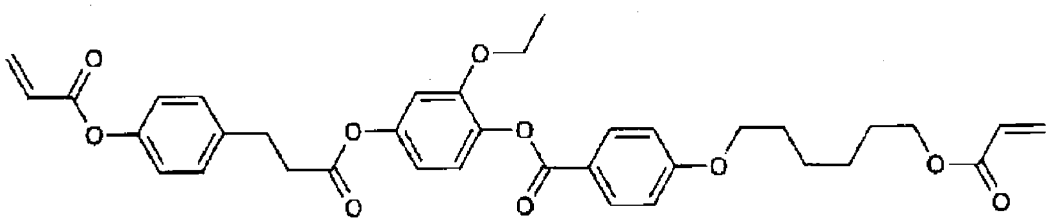

[Chem. 15]

Compound No. 10

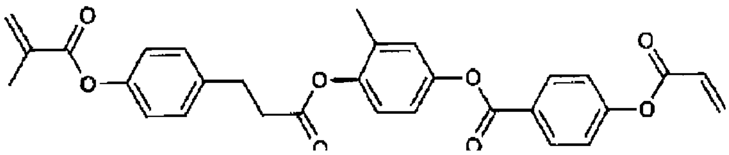

[Chem. 16]

Compound No. 11

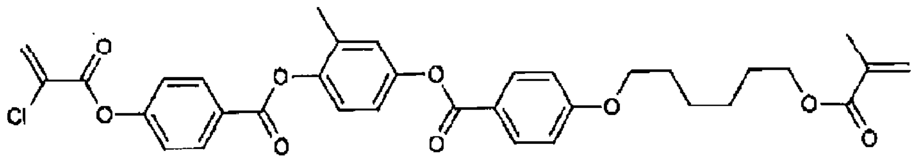

[Chem. 17]

Compound No. 11B

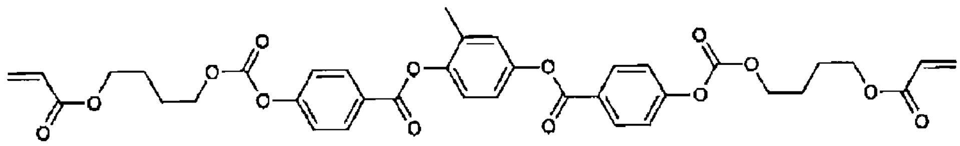

[Chem. 18]

Compound No. 12

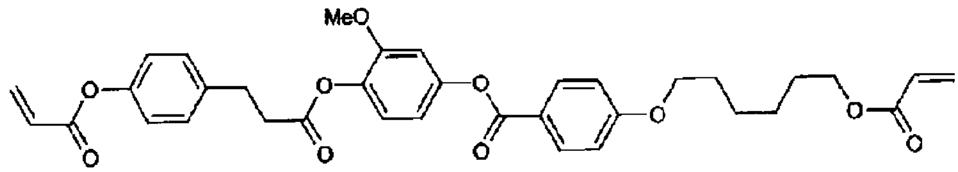

[Chem. 19]

Compound No. 13

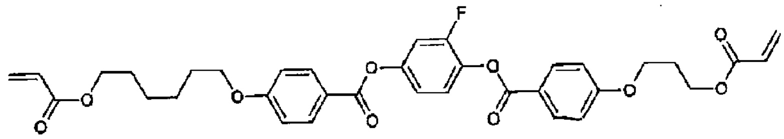

[Chem. 20]

Compound No. 14

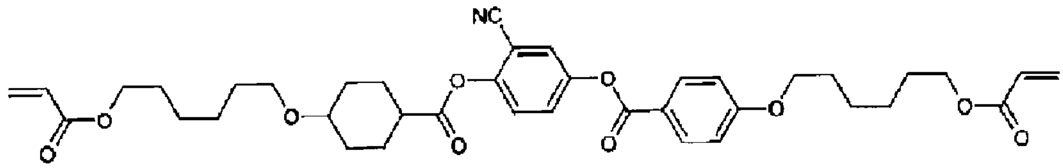

[Chem. 21]

Compound No. 15

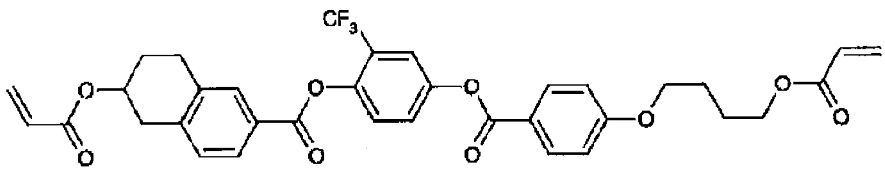

[Chem. 22]

Compound No. 16

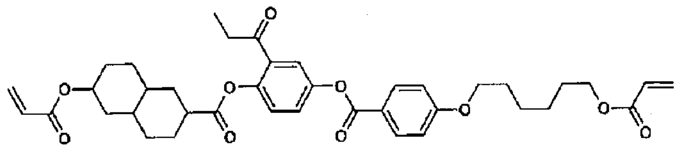

[Chem. 23]

Compound No. 17

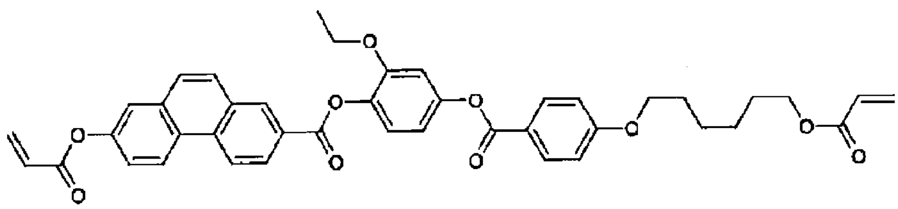

[Chem. 24]

Compound No. 18

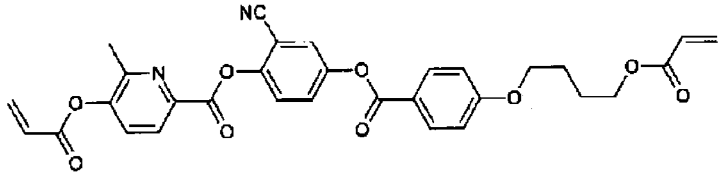

[Chem. 25]

Compound No. 19

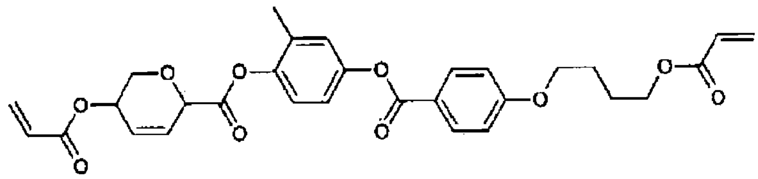

[Chem. 26]

Compound No. 20

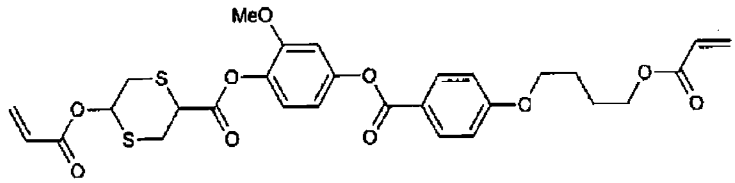

[Chem. 27]

Compound No. 21

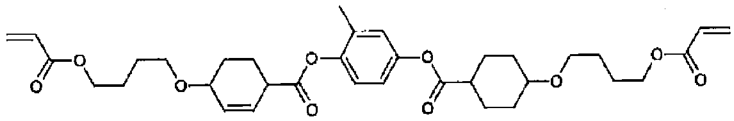

[Chem. 28]

Compound No. 22

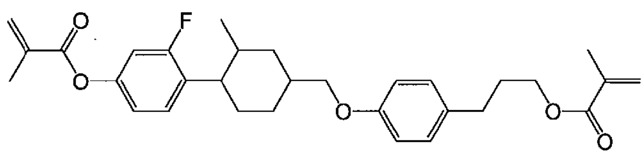

[Chem. 29]

Compound No. 23

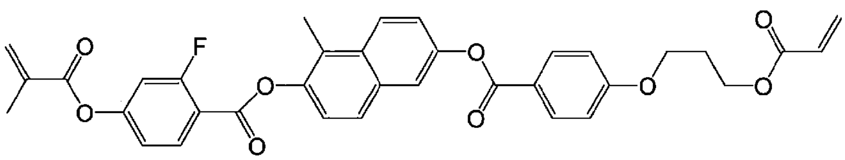

[Chem. 30]

Compound No. 24

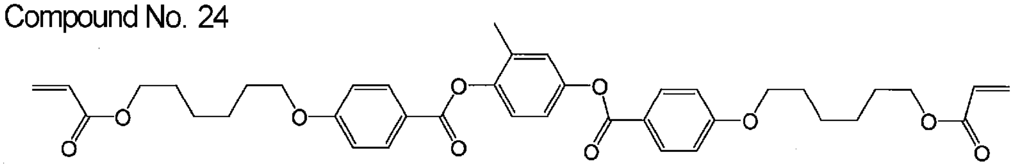

[Chem. 31]

Compound No. 25

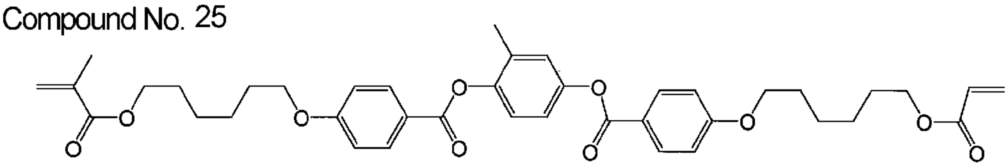

[Chem. 32]

Compound No. 26

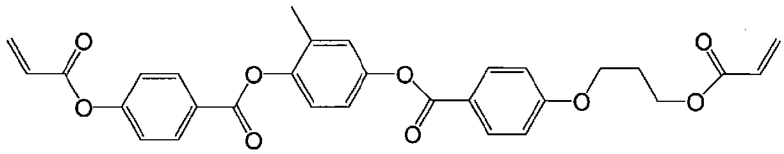

[Chem. 33]

Compound No. 27

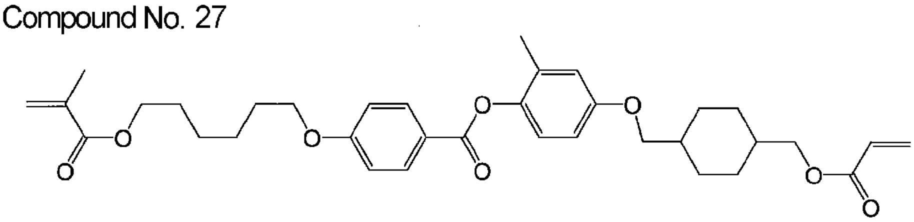

[Chem. 34]

Compound No. 28

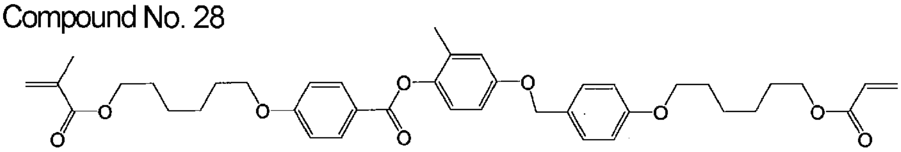

[Chem. 35]

Compound No. 29

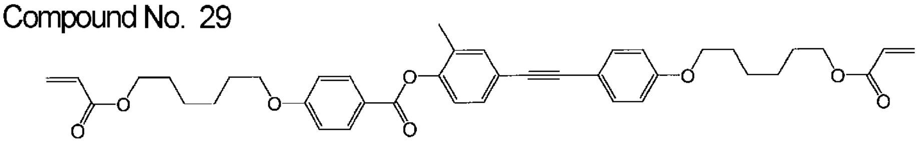

[Chem. 36]

Compound No. 30

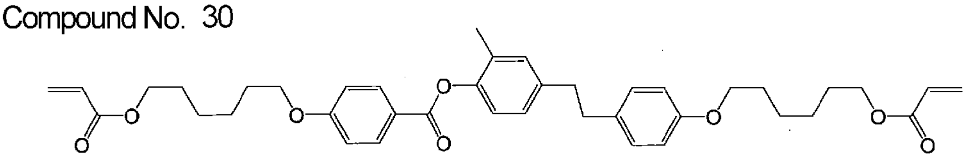

Compound (A) is not limited by the process of preparation and may be prepared using any known reactions. For example, a phenol compound is esterified with a methacrylic halide or an acrylic halide, or the carboxyl group of a compound having a methacryloyl group or an acryloyl group is mesylated with methanesulfonyl chloride and then esterified with a compound having a phenol group.

The content of compound (A) in the polymerizable composition of the invention is preferably at least 80 parts by mass in terms of excellent alignment properties of cured products and 99 mass% or less in terms of curing properties per 100 parts by mass of the sum of compounds (A) and (B) on a solid basis. A more preferred content of component (A) is 90 to 99 parts by mass per 100 parts by mass of the sum of compounds (A) and (B).

II. Compound (B)

Compound (B) used in the polymerizable composition of the invention is at least one compound (B1) having an indole structure and an oxime ester group.

Compound (B1) having an indole structure and an oxime ester group embraces geometric isomers and optical isomers. Any of these isomers is useful with no distinction. Therefore, compound (B1) may be one of the isomers or a mixture of the isomers, not being limited to any specific isomeric structure.

The polymerizable composition containing a compound represented by general formula (III) shown above as compound (B1) having an indole structure and an oxime ester group exhibits high sensitivity and provides a cured product having high transparency.

In formula (III), the C1-C30 hydrocarbon group as represented by $R^{13}$, $R^{21}$ to $R^{23}$, and $R^{31}$ to $R^{34}$ may preferably be, but not limited to, a C1-C20 alkyl group, a C2-C20 alkenyl group, a C3-20 cycloalkyl group, a C4-C20 cycloalkylalkyl group, a C6-C30 aryl group, or a C7-C30 aralkyl group. More preferred are a C1-10 alkyl group, a C2-C10 alkenyl group, a C3-10 cycloalkyl group, a C4-C10 cycloalkylalkyl group, a C6-C10 aryl group, and a C7-C10 aralkyl group in the interests of good sensitivity as a polymerization initiator.

Examples of the C1-C20 alkyl group referred to above and the C1-C20 alkyl group as represented by $R^{24}$ to $R^{26}$ in formula (III) include methyl, ethyl propyl, isopropyl, butyl, isobutyl, s-butyl, t-butyl, amyl, isoamyl, t-amyl, hexyl, heptyl, octyl, isooctyl, 2-ethylhexyl, t-octyl, nonyl, isononyl, decyl, isodecyl, undecyl, dodecyl, tetradecyl, hexadecyl, octadecyl, and eicosyl. Examples of the 1-C10 alkyl group referred to above include methyl, ethyl, propyl, isopropyl, butyl, isobutyl, s-butyl, t-butyl, amyl, isoamyl, t-amyl, hexyl, heptyl, octyl, isooctyl, 2-ethylhexyl, t-octyl, nonyl, isononyl, decyl, and isodecyl.

Examples of the C2-C20 alkenyl group include vinyl, 2-propenyl, 3-butenyl, 2-butenyl, 4-pentenyl, 3-pentenyl, 2-hexenyl, 3-hexenyl, 5-hexenyl, 2-heptenyl, 3-heptenyl, 4-heptenyl, 3-octenyl, 3-nonenyl, 4-decenyl, 3-undecenyl, 4-dodecenyl, 3-cyclohexenyl, 2,5-cyclohexadienyl-1-methyl, and 4,8,12-tetradecatrienylallyl. Examples of the C2-C10 alkenyl group include vinyl, 2-propenyl, 3-butenyl, 2-butenyl, 4-pentenyl, 3-pentenyl, 2-hexenyl, 3-hexenyl, 5-hexenyl, 2-heptenyl, 3-heptenyl, 4-heptenyl, 3-octenyl, 3-nonenyl, and 4-decenyl.

The C3-C20 cycloalkyl group is a saturated monocyclic or saturated polycyclic alkyl group having 3 to 20 carbon atoms. Examples thereof include cyclopropyl, cyclobutyl, cyclopentyl, cyclohexyl, cycloheptyl, cyclooctyl, cyclononyl, cyclodecyl, adamantyl, decahydronaphthyl, octahydropentalene, bicycle[1.1.1]pentanyl, and tetradecahydroanthracenyl. Examples of the C3-C10 cycloalkyl group include cyclopropyl, cyclobutyl, cyclopentyl, cyclohexyl, cycloheptyl, cyclooctyl, cyclononyl, cyclodecyl, adamantyl, decahydronaphthyl, octahydropentalene, and bicycle[1.1.1]pentanyl.

The C4-C20 cycloalkylalkyl group is an alkyl group substituted with a cycloalkyl group and having 4 to 20 carbon atoms in total. Examples thereof include cyclopropylmethyl, cyclobutylmethyl, cyclopentylmethyl, cyclohexylmethyl, cycloheptylmethyl, cyclooctylmethyl, cyclononylmethyl, cyclodecylmethyl, 2-cyclobutylethyl, 2-cyclopentylethyl, 2-cyclohexylethyl, 2-cycloheptylethyl, 2-cyclooctylethyl, 2-cyclononylethyl, 2-cyclodecylethyl, 3-cyclobutylpropyl, 3-cyclopentylpropyl, 3-cyclohexylpropyl, 3-cycloheptylpropyl, 3-cyclooctylpropyl, 3-cyclononylpropyl, 3-cyclodecylpropyl, 4-cyclobutylbutyl, 4-cyclopentylbutyl, 4-cyclohexylbutyl, 4-cyclopheptylbutyl, 4-cyclooctylbutyl, 4-cyclononylbutyl, 4-cyclodecylbutyl, 3,3-adamantylpropyl, and decahydronaphthylpropyl. Examples of the C4-C10 cycloalkylalkyl group include cyclopropylmethyl, cyclobutylmethyl, cyclopentylmethyl, cyclohexylmethyl, cycloheptylmethyl, cyclooctylmethyl, cyclononylmethyl, 2-cyclobutylethyl, 2-cyclopentylethyl, 2-cyclohexylethyl, 2-cycloheptylethyl, 2-cyclooctylethyl, 3-cyclobutylpropyl, 3-cyclopentylpropyl, 3-cyclohexylpropyl, 3-cycloheptylpropyl, 4-cyclobutylbutyl, 4-cyclopentylbutyl, and

4-cyclohexylbutyl.

Examples of the C6-C30 aryl group include phenyl, tolyl, xylyl, ethylphenyl, naphthyl, anthryl, and phenanthrenyl; and phenyl, biphenylyl, naphthyl, and anthryl groups each substituted with at least one of the above described alkyl and alkenyl groups, a carboxyl group, a halogen atom, and so on, such as 4-chlorophenyl, 4-carboxyphenyl, 4-vinylphenyl, 4-methylphenyl, and 2,4,6-trimethylphenyl. Examples of the C6-C10 aryl group include phenyl, tolyl, xylyl, ethylphenyl, and naphthyl; and phenyl, biphenylyl, naphthyl, and anthryl groups each substituted with at least one of the above described alkyl and alkenyl groups, a carboxyl group, a halogen atom, and so on, such as 4-chlorophenyl, 4-carboxyphenyl, 4-vinylphenyl, 4-methylphenyl, and 2,4,6-trimethylphenyl.

The C7-C30 aralkyl group is an alkyl group substituted with an aryl group and having a total of 7 to 30 carbon atoms. Examples thereof include benzyl, α-methylbenzyl, α,α-dimethylbenzyl, phenylethyl, and naphthylpropyl. The C7-C20 aralkyl group is an alkyl group substituted with an aryl group and having a total of 7 to 30 carbon atoms. Examples thereof include benzyl, α-methylbenzyl, α,α-dimethylbenzyl, and phenylethyl.

Examples of the C2-C20 group containing a heterocyclic ring as represented by $R^{13}$, $R^{21}$ to $R^{23}$, $R^{31}$ to $R^{34}$ in formula (III) include pyrrolyl, pyridyl, pyridylethyl, pyrimidyl, pyridazyl, piperazyl, piperidyl, pyranyl, pyranylethyl, pyrazolyl, triazyl, triazylmethyl, pyrrolidyl, quinolyl, isoquinolyl, imidazolyl, benzimidazolyl, triazolyl, furyl, furanyl, benzofuranyl, thienyl, thiophenyl, benzothiophenyl, thiadiazolyl, thiazolyl, benzothiazolyl, oxazolyl, benzoxazolyl, isothiazolyl, isoxazolyl, indolyl, morpholinyl, thiomorpholinyl, 2-pyrroldinon-1-yl, 2-piperidon-1-yl, 2,4-dioxyimidazolidin-3-yl, and 2,4-dioxyoxazolidin-3-yl. Preferred of these examples are those having 2 to 10 carbon atoms in view of high sensitivity of compound (B1) as a polymerization initiator. Examples of the C2-C20 heterocyclic ring-containing group include pyrrolyl, pyridyl, pyridylethyl, pyrimidyl, pyridazyl, piperazyl, piperidyl, pyranyl, pyranylethyl, pyrazolyl, triazyl, triazylmethyl, pyrrolidyl, quinolyl, isoquinolyl, imidazolyl, benzimidazolyl, triazolyl, furyl, furanyl, benzofuranyl, thienyl, thiophenyl, benzothiophenyl, thiadiazolyl, thiazolyl, benzothiazolyl, oxazolyl, benzoxazolyl, isoxazolyl, indolyl, morpholinyl, thiomorpholinyl, 2-pyrrolidinon-1-yl, 2-piperidon-1-yl, 2,4-dioxyimidazolidin-3-yl, 2,4-dioxyoxazolidin-3-yl. More illustrative examples of the heterocyclic ring-containing group are shown below by way of structural formulae inclusive of substituents.

[Chem. 36A]

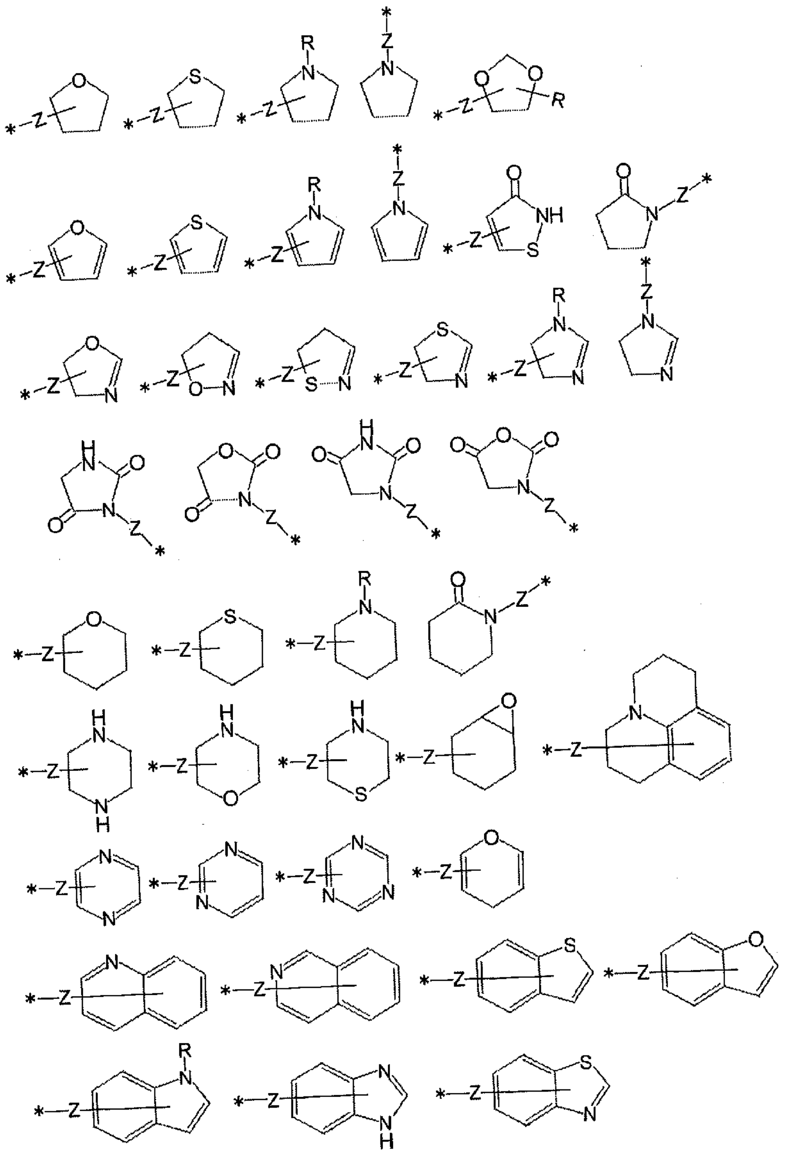

wherein R represents a hydrogen atom or a C1-C6 alkyl group; Z represents a direct bond or a C1-C6 alkylene group; and the asterisk indicates the position where the group is linked to its neighboring group.

Examples of the ring formed by the combination of $R^{13}$ and $R^{17}$, the combination of $R^{13}$ and $R^{18}$, the combination of $R^{14}$ and $R^{15}$, the combination of $R^{15}$ and $R^{16}$, and the combination of $R^{16}$ and $R^{17}$ in formula (III) include 5- to 7-membered rings, such as cyclopentane, cyclohexane, cyclopentene, benzene, pyrrolidine, pyrrole, piperazine, morpholine, thiomorpholine, tetrahydropyridine, lactone, and lactam rings; and fused rings, such as naphthalene and anthracene rings.

Of the compounds of formula (III), more preferred are those in which $R^{13}$ is a C6-C30 aryl group for ease of preparation and availability as well as high sensitivity and capability of providing a cured product having high transparency. Those in which $R^{13}$ is a C6-C30 aryl group having at least one of the hydrogen atoms thereof replaced by nitro, CN, or halogen are preferred in terms of sensitivity.

Of the compounds of formula (III), those in which $R^{11}$ is $R^{21}$, $R^{21}$ being a C1-C10 alkyl group, are preferred for excellent solvent solubility, and those in which $R^{12}$ is $R^{21}$, $R^{21}$ being methyl, ethyl or phenyl, are preferred for providing excellent curability when used as a polymerization initiator. Furthermore, those in which $R^{14}$ to $R^{17}$ are $R^{21}$ or CN, $R^{21}$ being hydrogen, particularly those in which $R^{14}$ to $R^{17}$ are hydrogen are preferred for ease of synthesis, and those in which $R^{18}$ is $R^{21}$, $R^{21}$ being hydrogen, are also preferred for ease of synthesis.

Specific preferred examples of the compound represented by formula (III) as compound (B1) having an indole

structure and an oxime ester group include, but are not limited to, compound Nos. 31 through 232 shown below.

[Chem. 37]

Compound No. 31

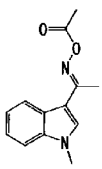

Compound No. 32

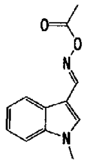

Compound No. 33

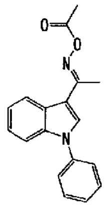

Compound No. 34

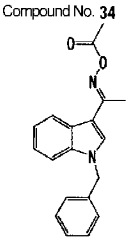

Compound No. 35

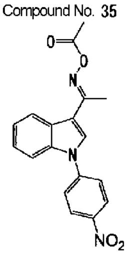

Compound No. 36

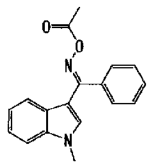

Compound No. 37

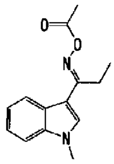

Compound No. 38

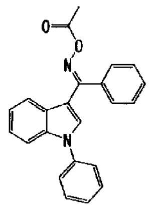

Compound No. 39

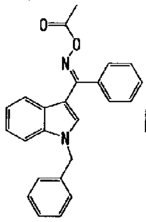

Compound No. 40

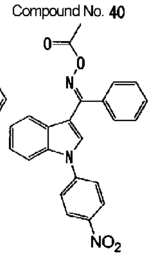

Compound No. 41

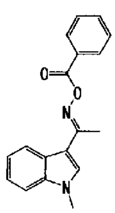

Compound No. 42

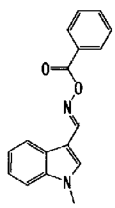

Compound No. 43

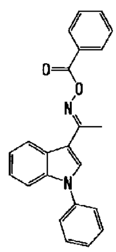

Compound No. 44

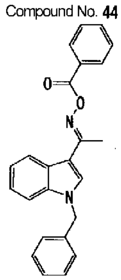

Compound No. 45

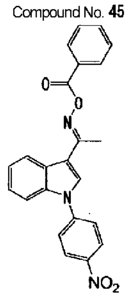

Compound No. 46

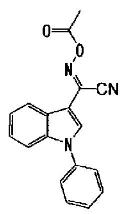

Compound No. 47

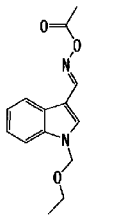

Compound No. 48

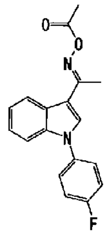

Compound No. 49

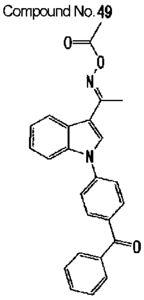

Compound No. 50

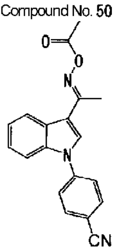

[Chem. 38]

Compound No. 51

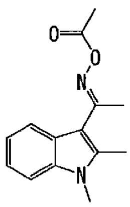

Compound No. 52

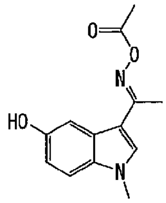

Compound No. 53

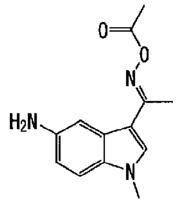

Compound No. 54

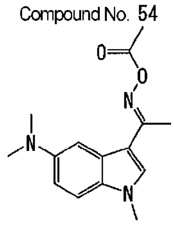

Compound No. 55

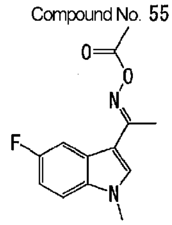

Compound No. 56

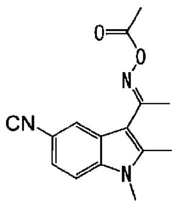

Compound No. 57

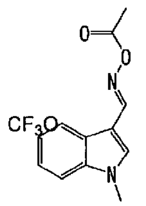

Compound No. 58

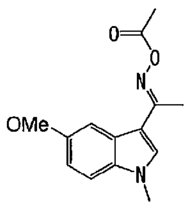

Compound No. 59

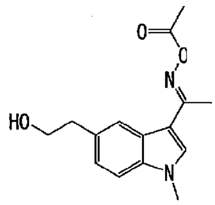

Compound No. 60

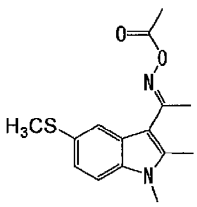

Compound No. 61

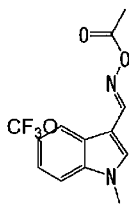

Compound No. 62

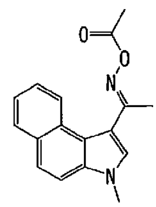

Compound No. 63

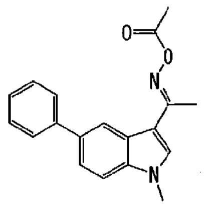

Compound No. 64

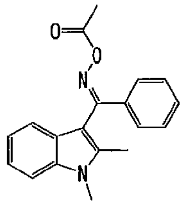

Compound No. 65

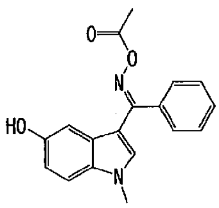

Compound No. 66

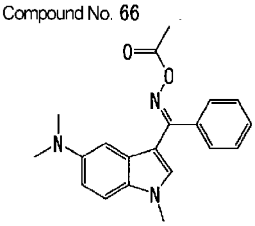

Compound No. 67

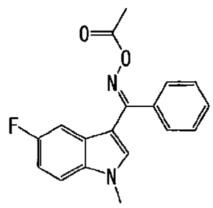

Compound No. 68

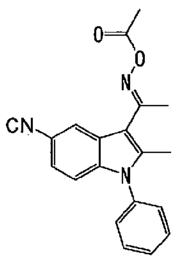

Compound No. 69

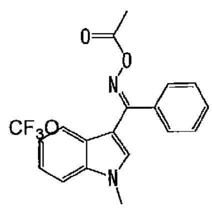

Compound No. 70

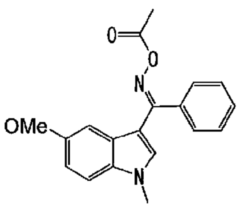

Compound No. 71

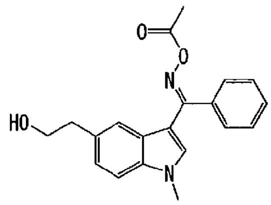

[Chem. 39]

Compound No. 72

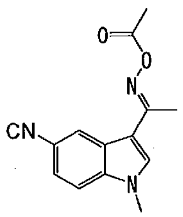

Compound No. 73

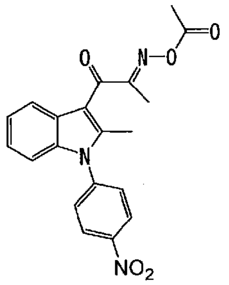

Compound No. 74

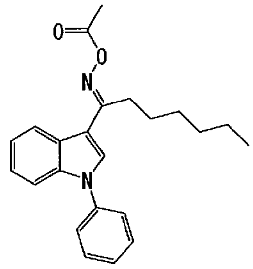

Compound No. 75

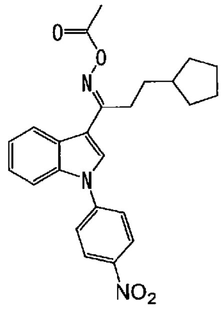

Compound No. 76

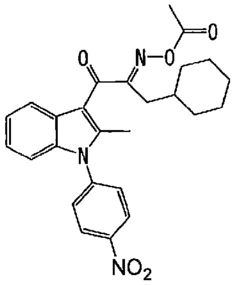

Compound No. 77

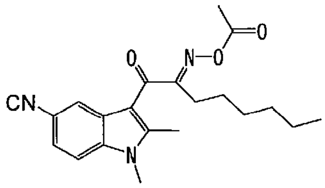

Compound No. 78

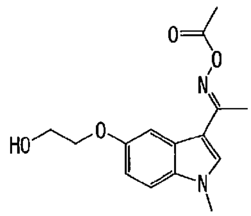

Compound No. 79

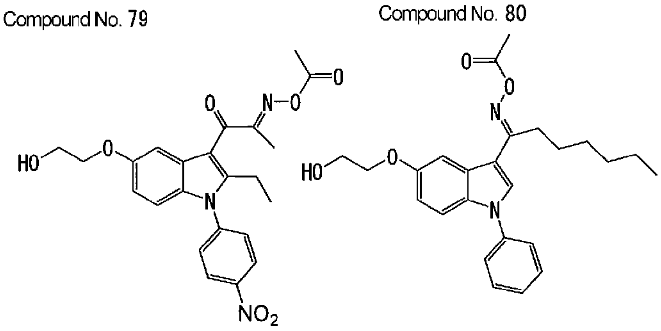

Compound No. 80

Compound No. 81

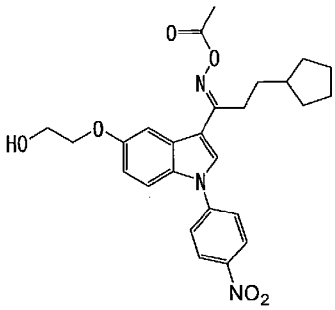

Compound No. 82

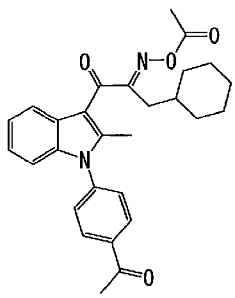

Compound No. 83

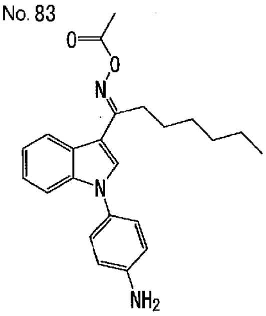

[Chem. 40]

Compound No. 84

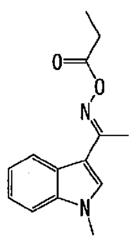

Compound No. 85

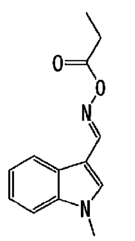

Compound No. 86

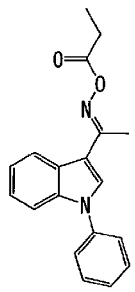

Compound No. 87

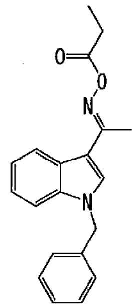

Compound No. 88

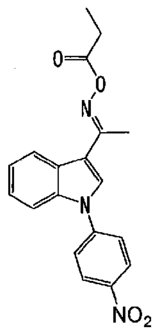

Compound No. 89

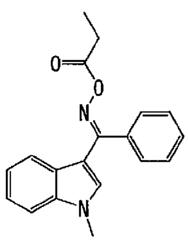

Compound No. 90

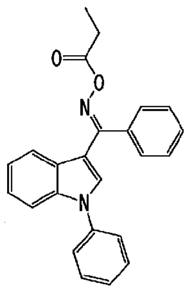

Compound No. 91

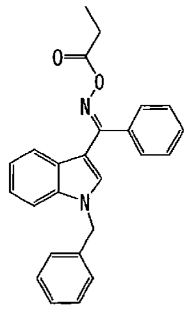

Compound No. 92

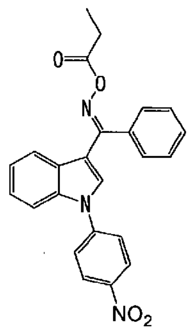

Compound No. 93

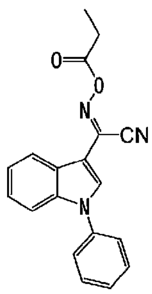

Compound No. 94

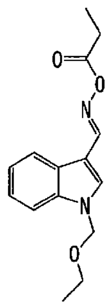

Compound No. 95

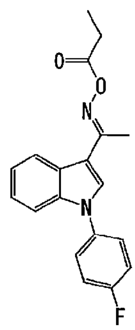

Compound No. 96

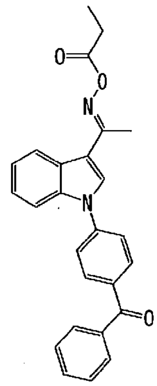

Compound No. 97

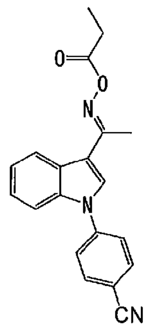

[Chem. 41]

Compound No. 98

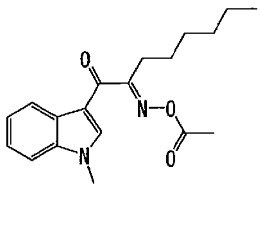

Compound No. 99

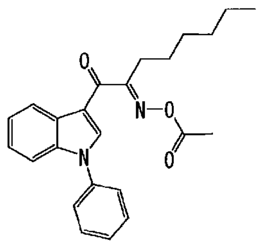

Compound No. 100

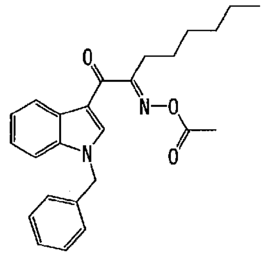

Compound No. 101

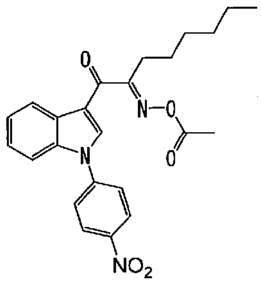

Compound No. 102

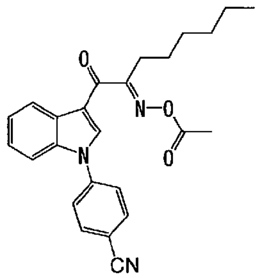

Compound No. 103

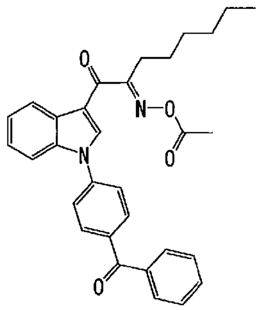

Compound No. 104

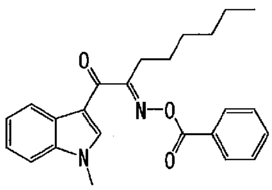

Compound No. 105

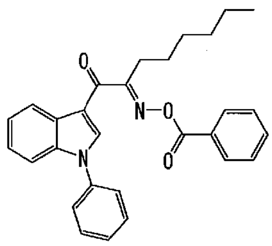

Compound No. 106

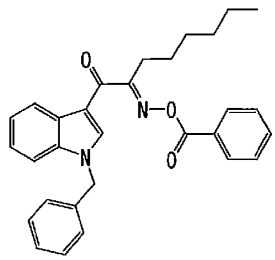

Compound No. 107

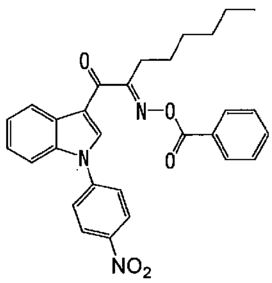

Compound No. 108

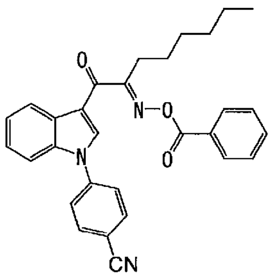

Compound No. 109

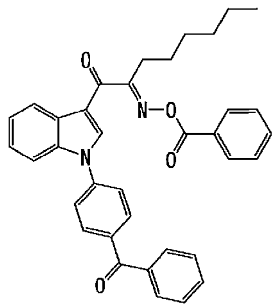

[Chem. 42]

Compound No. 110

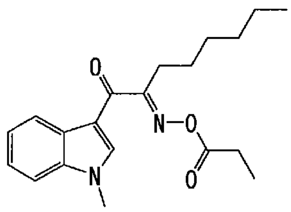

Compound No. 111

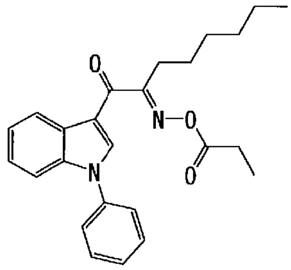

Compound No. 112

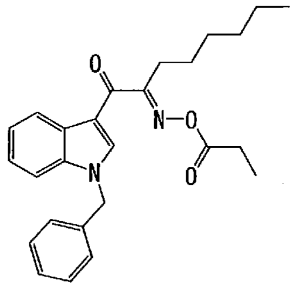

Compound No. 113

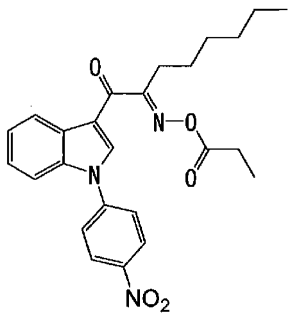

Compound No. 114

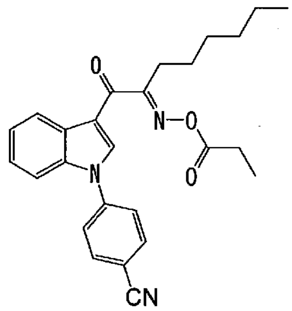

Compound No. 115

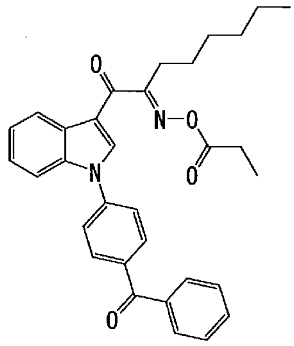

[Chem. 43]

Compound No. 116

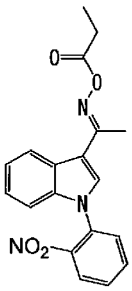

Compound No. 117

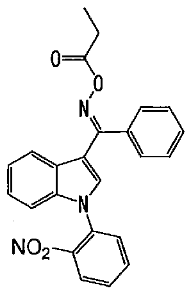

Compound No. 118

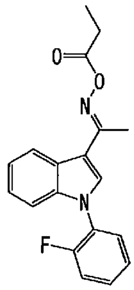

Compound No. 119

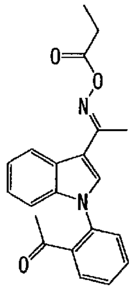

Compound No. 120

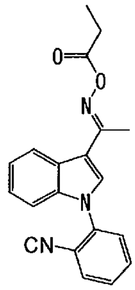

Compound No. 121

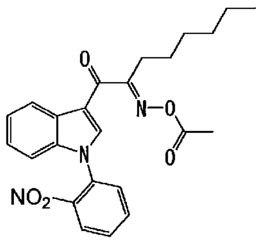

Compound No. 122

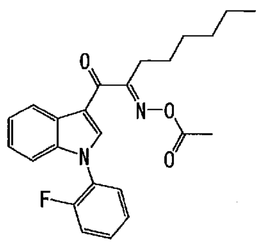

Compound No. 123

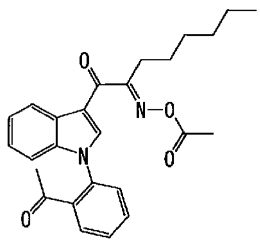

Compound No. 124

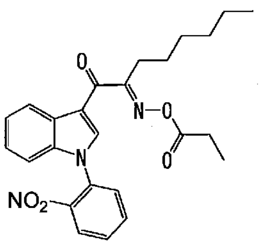

Compound No. 125

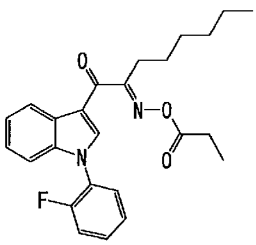

Compound No. 126

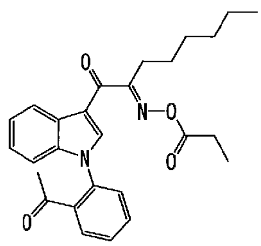

Compound No. 127

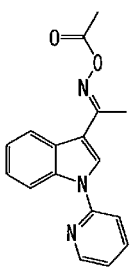

Compound No. 128

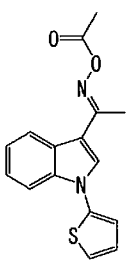

Compound No. 129

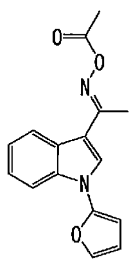

Compound No. 130

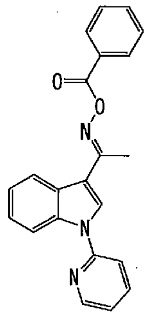

Compound No. 131

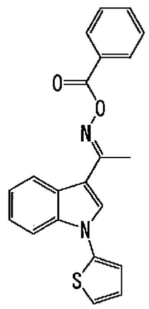

[Chem. 44]

Compound No. 132

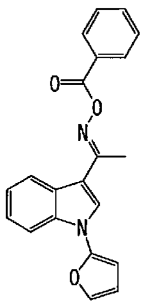

Compound No. 133

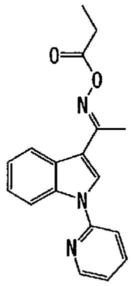

Compound No. 134

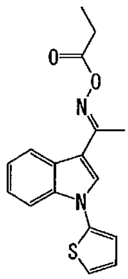

Compound No. 135

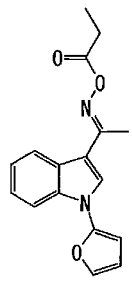

Compound No. 136

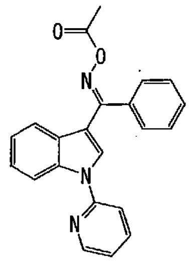

Compound No. 137

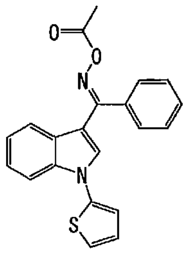

Compound No. 138

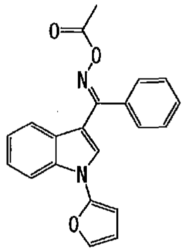

Compound No. 139

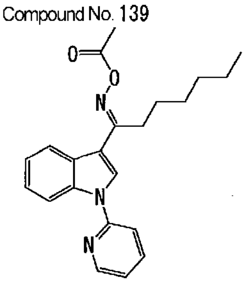

Compound No. 140

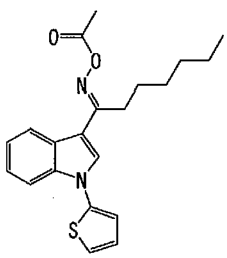

Compound No. 141

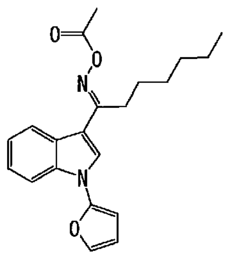

Compound No. 142

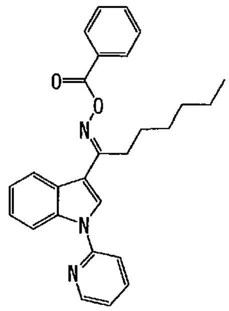

Compound No. 143

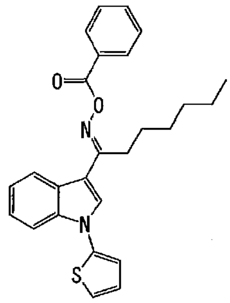

Compound No. 144

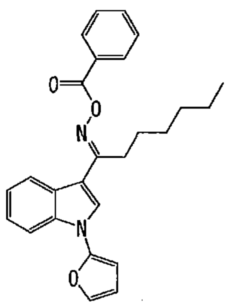

Compound No. 145

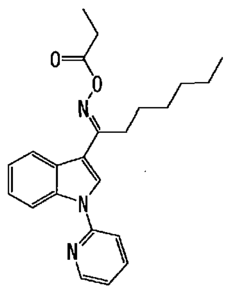

Compound No. 146

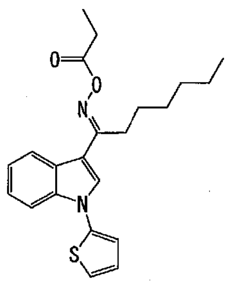

Compound No. 147

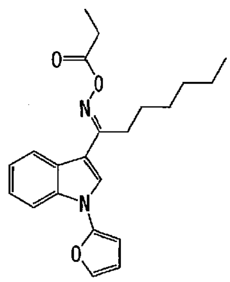

[Chem. 45]

Compound No. 148

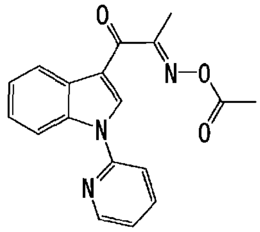

Compound No. 149

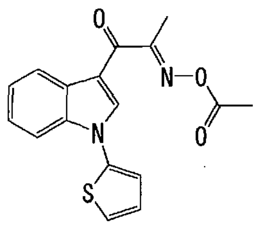

Compound No. 150

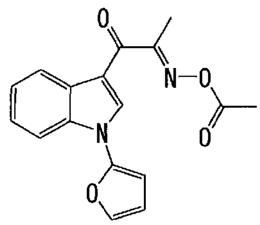

Compound No. 151

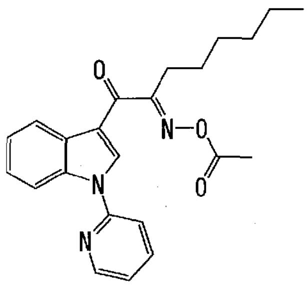

Compound No. 152

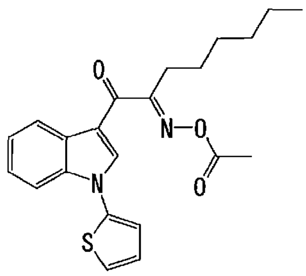

Compound No. 153

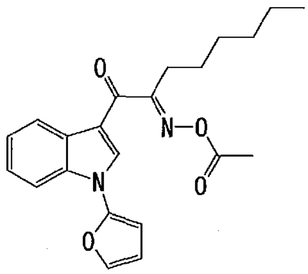

Compound No. 154

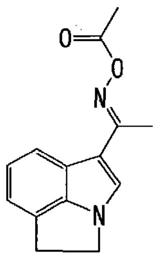

Compound No. 155

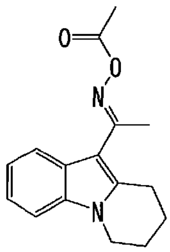

Compound No. 156

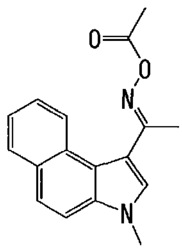

Compound No. 157

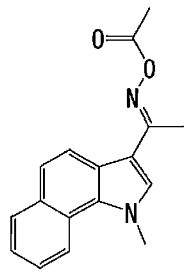

Compound No. 158

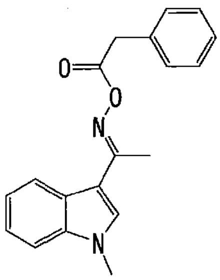

Compound No. 159

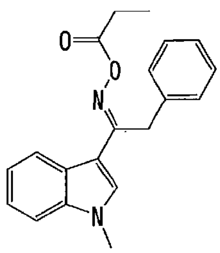

Compound No. 160

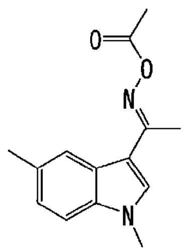

[Chem. 46]

Compound No. 161

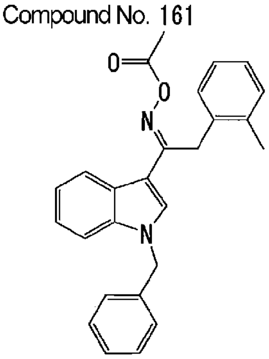

Compound No. 162

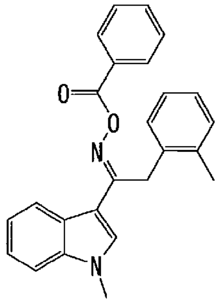

Compound No. 163

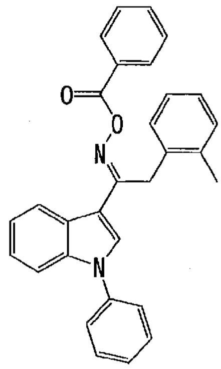

Compound No. 164

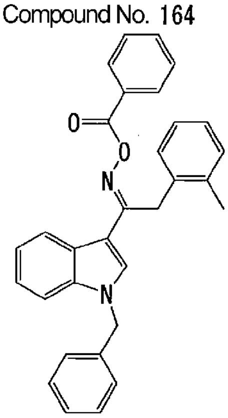

Compound No. 165

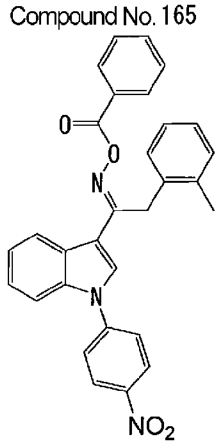

Compound No. 166

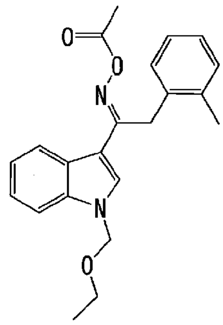

Compound No. 167

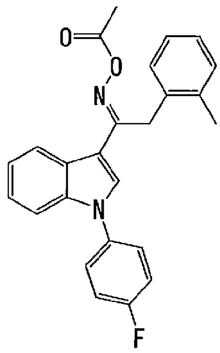

Compound No. 168

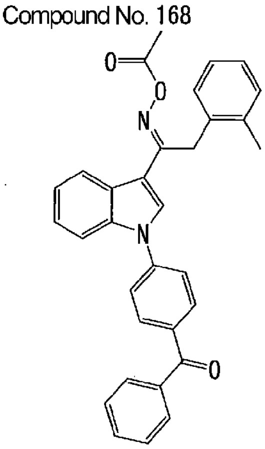

Compound No. 169

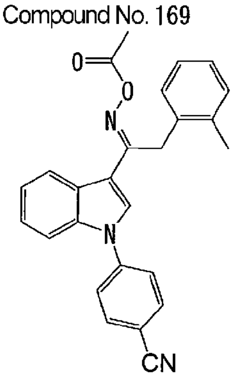

[Chem. 47]

Compound No. 170

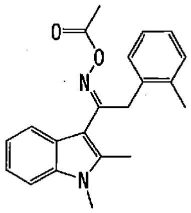

Compound No. 171

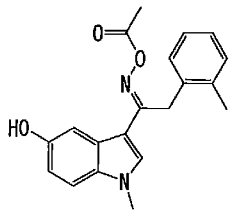

Compound No. 172

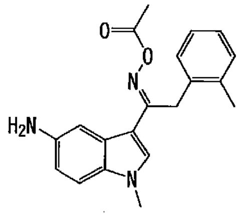

Compound No. 173

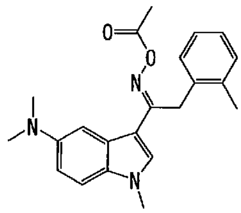

Compound No. 174

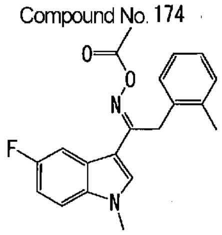

Compound No. 175

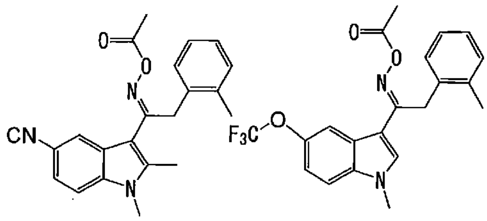

Compound No. 176

Compound No. 177

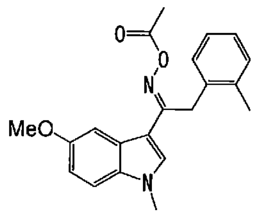

Compound No. 178

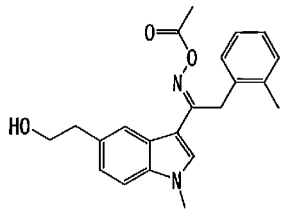

Compound No. 179

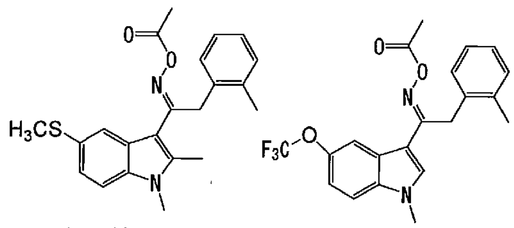

Compound No. 180

Compound No. 181

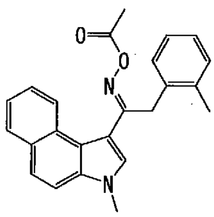

Compound No. 182

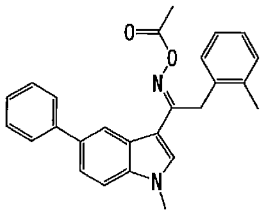

Compound No. 183

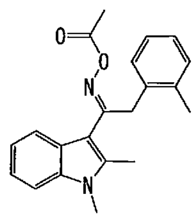

Compound No. 184

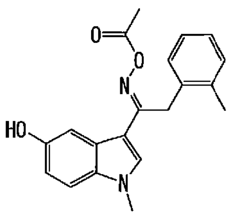

Compound No. 185

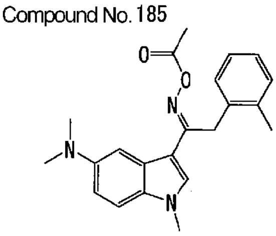

Compound No. 186

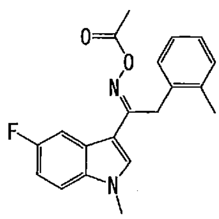

Compound No. 187

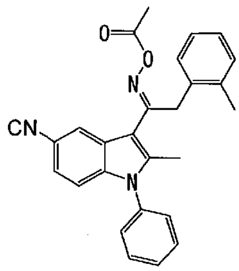

[Chem. 48]

Compound No. 188

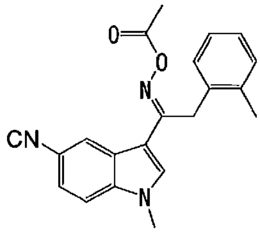

Compound No. 189

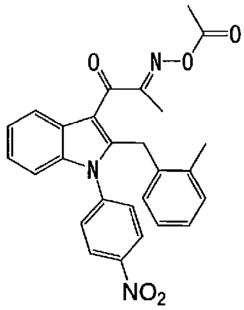

Compound No. 190

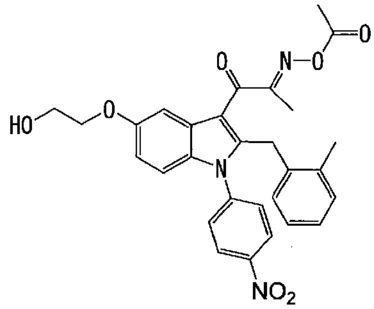

Compound No. 191

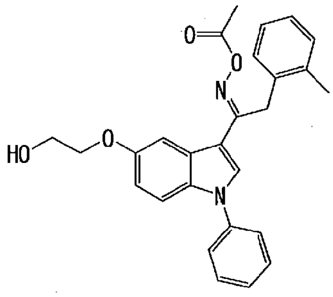

Compound No. 192

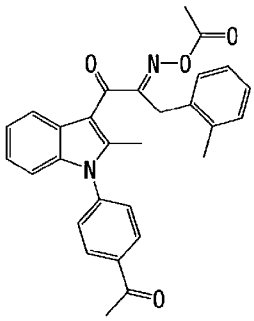

Compound No. 193

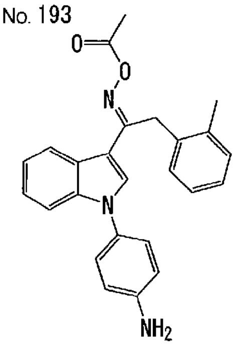

[Chem. 49]

Compound No. 194

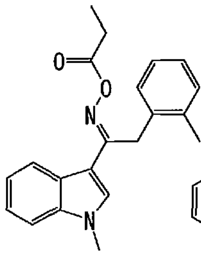

Compound No. 195

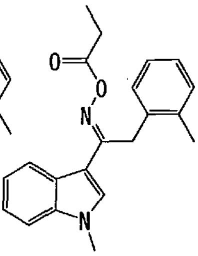

Compound No. 196

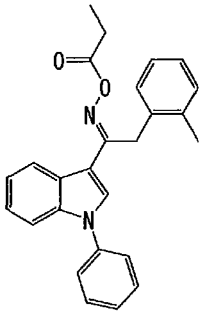

Compound No. 197

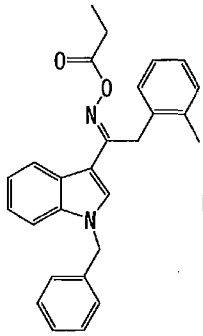

Compound No. 198

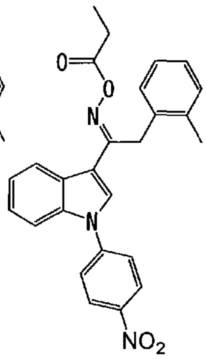

Compound No. 199

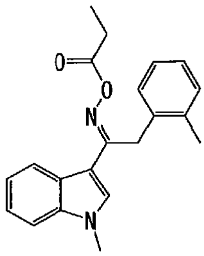

Compound No. 200

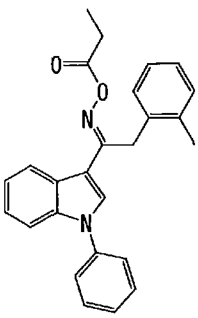

Compound No. 201

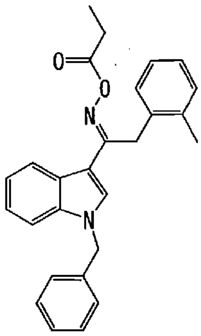

Compound No. 202

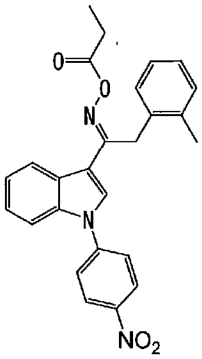

Compound No. 203

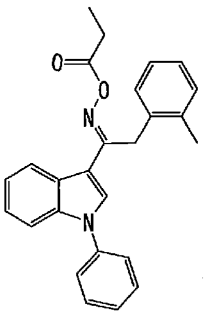

Compound No. 204

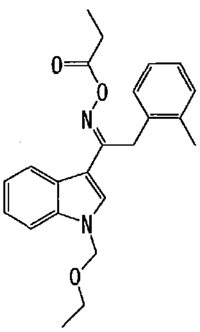

Compound No. 205

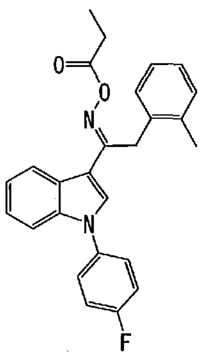

Compound No. 206

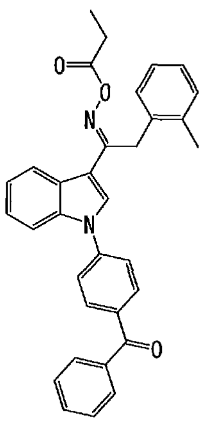

Compound No. 207

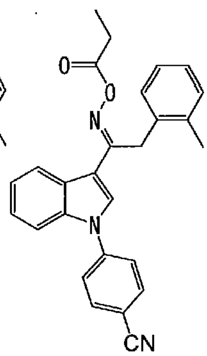

[Chem. 50]

Compound No. 208

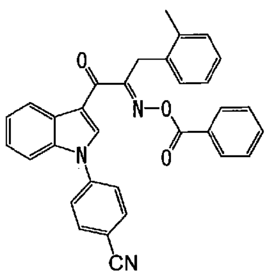

Compound No. 209

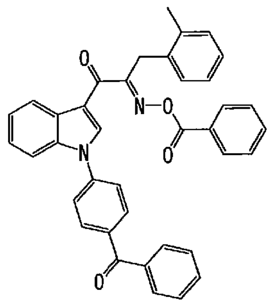

Compound No. 210 Compound No. 211

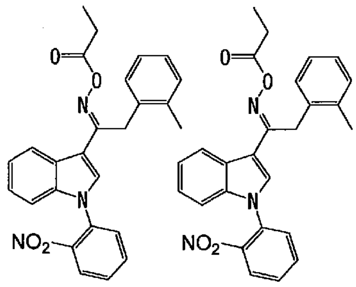

Compound No. 212

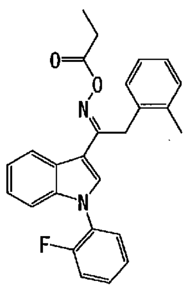

Compound No. 213

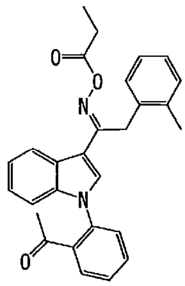

Compound No. 214

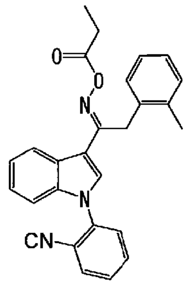

Compound No. 215

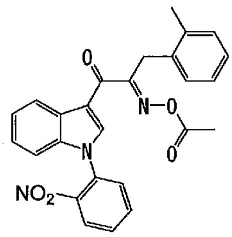

Compound No. 216

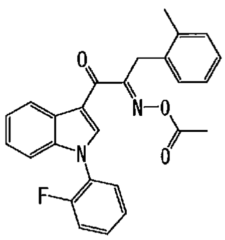

Compound No. 217

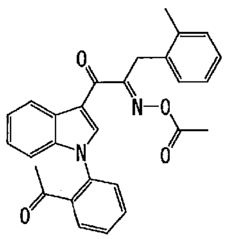

Compound No. 218

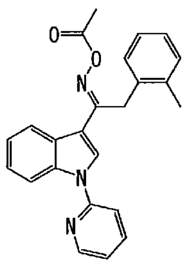

Compound No. 219

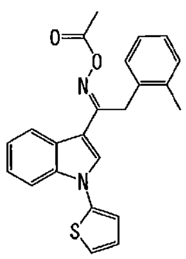

Compound No. 220

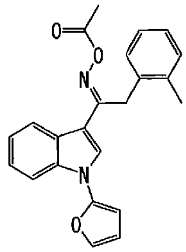

Compound No. 221

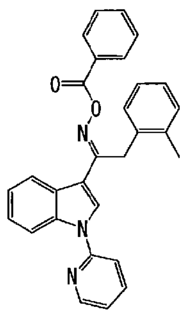

Compound No. 222

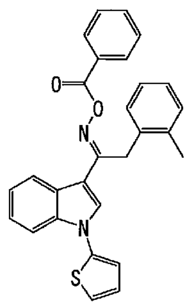

[Chem. 51]

Compound No. 223

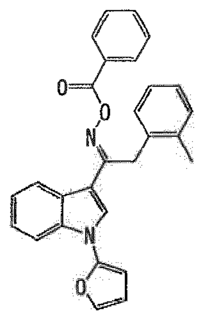

Compound No. 224

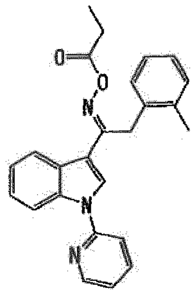

Compound No. 225

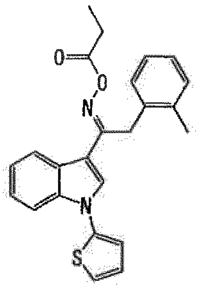

Compound No. 226

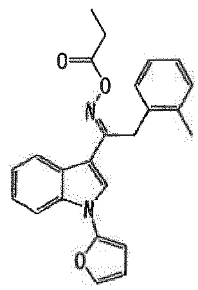

Compound No. 227

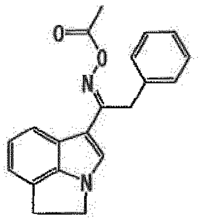

Compound No. 228

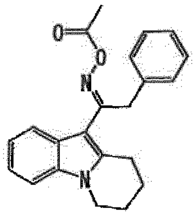

Compound No. 229

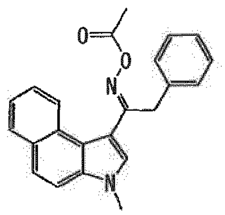

Compound No. 230

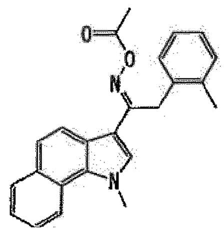

Compound No. 231

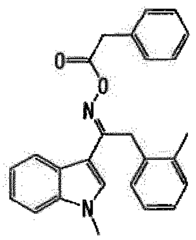

Compound No. 232

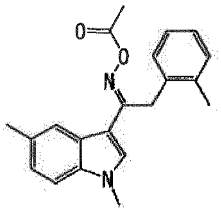

Compounds (B) are not limited by the process of preparation and may be prepared using any known reactions. For example, an indole compound is acylated with an acid chloride and then oximated with hydroxylamine hydrochloride, followed by causing the product to react with an acid anhydride or an acid chloride.

The mixing ratio of compounds (A) and (B) is not particularly limited as long as the effects of the invention are not impaired. It is preferred, though, that compound (B) is used in an amount of 0.1 to 10 parts, more preferably 0.5 to 8 parts, by mass per 100 parts by mass of the sum of compounds (A) and (B). With the amount of compound (B) being 0.1 part or more, the polymerization reaction is allowed to proceed easily. With the amount of compound (B) being 10 parts or less, precipitation of compound (B) from the polymerizable composition hardly occurs, so that the alignment properties of the composition are less likely to reduce, and the resulting cured film is easily prevented from deteriorating in optical physical properties.

The polymerizable composition of the invention may contain a liquid crystal compound other than compound (A) in an amount that does not ruin the effects of the invention, preferably in an amount of 1 to 100 parts, more preferably 3 to 50 parts, by mass per 100 parts by mass of the sum of compounds (A) and (B). Commonly used liquid crystal compounds may be used, including, but not being limited to, those represented by the formulae of group I below.

[Chem. 63]

Group I

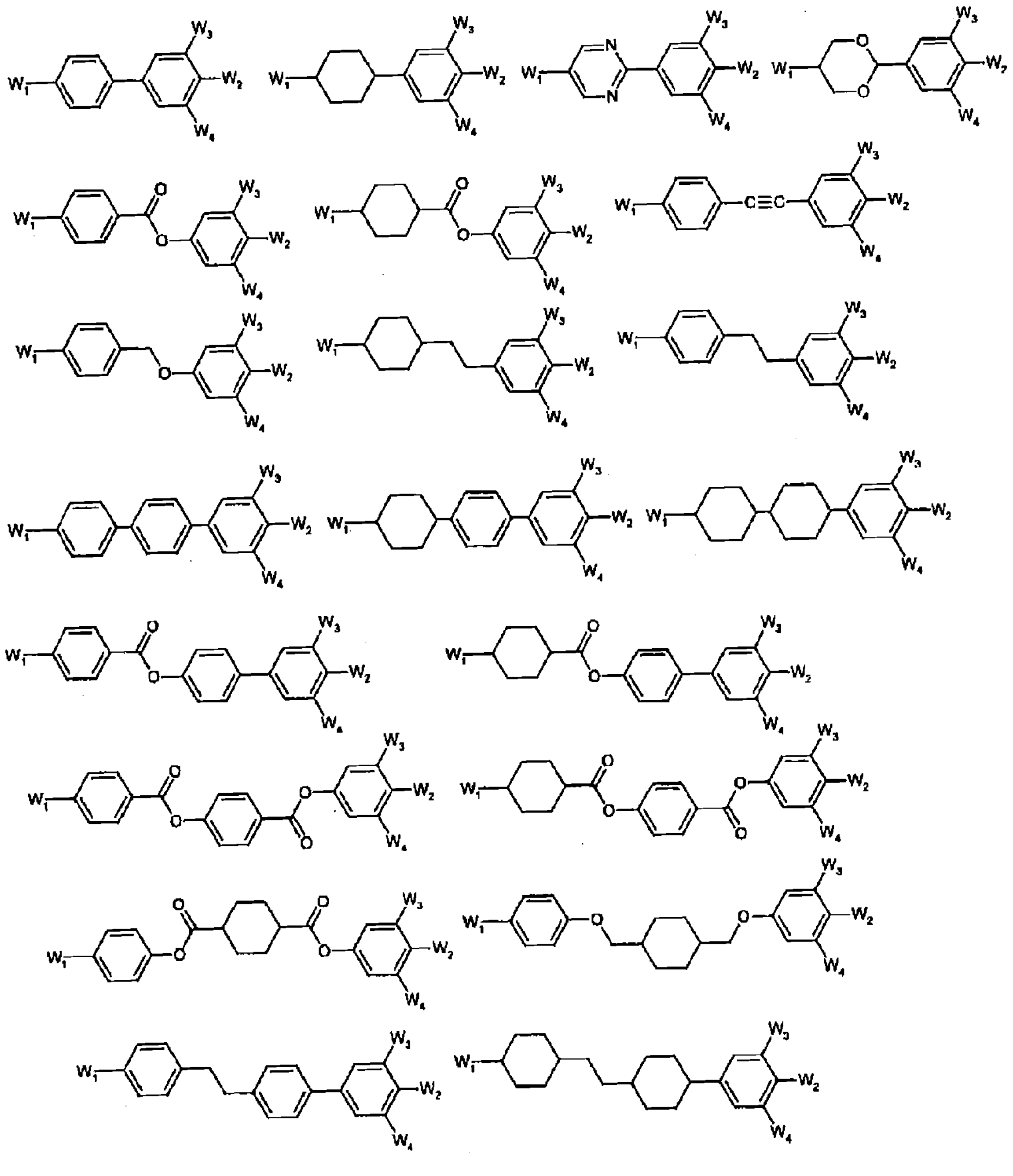

wherein $W_1$ represents a hydrogen atom, an optionally branched C1-C8 alkyl group, an optionally branched C1-C8 alkoxy group, an optionally branched C2-C8 alkenyl group, an optionally branched C2-C8 alkenyloxy group, an optionally branched C2-C8 alkoxyalkyl group, an optionally branched C2-8 alkanoyloxy group, or an optionally branched C2-C8 alkoxycarbonyl group; $W_3$ represents a cyano group, a halogen atom, an optionally branched C1-C8 alkyl group, an optionally branched C2-C8 alkanoyloxy group, or an optionally branched C2-C8 alkoxycarbonyl group; and $W_2$ and $W_4$ each independently represent a hydrogen atom, a halogen atom, or a nitrile group.

Compound (B) may be used in combination with any of other known radical polymerization initiators.

Examples of useful known radical polymerization initiators include benzoyl peroxide, 2,2'-azobisisobutyronitrile, benzoin ethers, benzophenones, acetophenones, benzyl ketals, diaryl iodonium salts, triaryl sulfonium salts, diphenyl iodonium tetrafluoroborate, diphenyl iodonium hexafluorophosphonate, diphenyl iodonium hexafluoroarsenate, diphenyl iodonium tetra(pentafluorophenyl)borate, 4-methoxyphenyl phenyl iodonium tetrafluoroborate, 4-methoxyphenyl phenyl

iodonium hexafluorophosphonate, 4-methoxyphenyl phenyl iodonium hexafluoroarsenate, bis(4-tert-butylphenyl) iodonium diphenyl iodonium tetrafluoroborate, bis(4-tert-butylphenyl) iodonium diphenyl iodonium hexafluoroarsenate, bis(4-tert-butylphenyl) iodonium diphenyl iodonium trifluoromethanesulfonate, triphenyl sulfonium hexafluorophosphonate, triphenyl sulfonium hexafluoroarsenate, triphenyl sulfonium tetra(pentafluorophenyl)borate, 4-methoxyphenyl diphenyl sulfonium tetrafluoroborate, 4-methoxyphenyl diphenyl sulfonium hexafluorophosphonate, 4-methoxyphenyl diphenyl sulfonium hexafluoroarsenate, 4-methoxyphenyl diphenyl sulfonium trifluoromethanesulfonate, 4-methoxyphenyl diphenyl sulfonium triphenyl sulfonium tetra(pentafluorophenyl)borate, 4-phenylthiophenyl diphenyl sulfonium tetrafluoroborate, 4-phenylthiophenyl diphenyl sulfonium hexafluorophosphonate, 4-phenylthiophenyl diphenyl sulfonium hexafluoroarsenate, p-methoxyphenyl-2,4-bis(trichloromethyl)-s-triazine, 2-(p-butoxystyryl)-s-triazine, 2-(p-butoxystyryl)-5-trichloromethyl-1,3,4-oxadiazole, 9-phenylacridine, 9,10-dimethylbenzphenazine, benzophenone/Michler's ketone, hexaarylbiimidazole/mercaptobenzimidazole, benzyl dimethyl ketal, thioxanthone/amine, triarylsulfonium hexafluorophosphates, and bis(2,4,6-trimethylbenzoyl) phenylphosphine oxide.

Commercially available radical polymerization initiators may be used as the known radical polymerization initiator to be combined, including N-1414, N-1717, N-1919, NCI-831, and NCI-903 (all from ADEKA Corp.); Irgacure 369, Irgacure 907, Irgacure OXE 01, and Irgacure OXE 02 (all from BASF); and benzoyl peroxide. These polymerization initiators may be used either individually or in combination of two or more thereof.

The amount of the known radical polymerization initiator, if used in combination with compound (B), is preferably not more than 50 parts, more preferably not more than 30 parts, by mass per 100 parts by mass of compound (B).

The polymerizable composition of the invention preferably shows a liquid crystal phase at least at or near room temperature, specifically 30°C or lower, more preferably 25°C or lower, in the interests of ease of use as an optical material. It is also preferred for the polymerizable composition to exhibit a liquid crystal phase at any temperature below the above upper limit. Whether the polymerizable composition exhibits a liquid crystal phase may be examined in the same manner as described above with respect to the compound (A).

Where necessary, the polymerizable composition of the invention may contain other monomer (a compound having an ethylenically unsaturated bond) as dissolved in a solvent together with the radical polymerization initiator.

Examples of the other monomers include (meth)acrylic esters, such as methyl (meth)acrylate, ethyl (meth)acrylate, propyl (meth)acrylate, butyl (meth)acrylate, s-butyl (meth)acrylate, t-butyl (meth)acrylate, hexyl (meth)acrylate, 2-ethylhexyl (meth)acrylate, tetrahydrofurfuryl (meth)acrylate, glycidyl (meth)acrylate, allyl (meth)acrylate, allyloxy (meth)acrylate, cyclohexyl (meth)acrylate, benzyl (meth)acrylate, 1-phenylethyl (meth)acrylate, 2-phenylethyl (meth)acrylate, furfuryl (meth)acrylate, diphenylmethyl (meth)acrylate, naphthyl (meth)acrylate, pentachlorophenyl (meth)acrylate, 2-chloroethyl (meth)acrylate, methyl $\alpha$-chloro(meth)acrylate, phenyl $\alpha$-bromo(meth)acrylate, trifluoroethyl (meth)acrylate, tetrafluoropropyl (meth)acrylate, polyethylene glycol di(meth)acrylate, 1,4-butanediol di(meth)acrylate, 1,6-hexanediol di(meth)acrylate, trimethylolpropane tri(meth)acrylate, pentaerythritol tri(meth)acrylate, pentaerythritol tetra(meth)acrylate, dipentaerythritol penta(meth)acrylate, and dipentaerythritol hexa(meth)acrylate; diacetoneacrylamide, styrene, vinyltoluene, and divinylbenzene.

In order to ensure the heat resistance and optical characteristics of a cured product obtained from the polymerizable composition of the invention, the content of the other monomers is preferably not more than 50 parts by mass, more preferably 30 parts by mass or less, per 100 parts by mass of the sum of compounds (A) and (B).

A combined use of the radical polymerization initiator and a sensitizer is also preferred. Examples of useful sensitizers are thioxanthone, phenothiazine, chlorothioxanthone, xanthone, anthracene, dipyhenylanthracene, and rubrene. When the radical polymerization initiator and/or the sensitizer is/are added, the amount of each of them is preferably 10 parts or less, more preferably 5 parts or less, even more preferably 0.1 to 3 parts, by mass per 100 parts by mass of the sum of compounds (A) and (B).

Examples of the solvent include benzene, toluene, xylene, mesitylene, n-butylbenzene, diethylbenzene, tetralin, methoxybenzene, 1,2-dimethoxybenzene, ethylene glycol dimethyl ether, diethylene glycol dimethyl ether, acetone, methyl ethyl ketone, methyl isobutyl ketone, cyclopentanone, cyclohexanone, ethyl acetate, methyl lactate, ethyl lactate, ethylene glycol monomethyl ether acetate, propylene glycol monomethyl ether acetate, propylene glycol monoethyl ether acetate, $\gamma$-butyrolactone, 2-pyrrolidone, N-methyl-2-pyrrolidone, dimethylformamide, chloroform, dichloromethane, carbon tetrachloride, dichloroethane, trichloroethylene, tetrachloroethylene, chlorobenzene, t-butyl alcohol, diacetone alcohol, glycerol, monoacetylene, ethylene glycol, triethylene glycol, hexylene glycol, ethylene glycol monomethyl ether, ethyl cellosolve, and butyl cellosolve. The solvent may be a single compound or a mixture of compounds. A solvent having a boiling point of 60° to 250°C, particularly a solvent having a boiling point of 60° to 180°C is preferred. A solvent whose boiling point is lower than 60°C is liable to vaporize during application, resulting in film thickness unevenness. A solvent whose boiling point is higher than 250°C tends to remain even after solvent removal under reduced pressure or induce thermal polymerization when treated in a high temperature, resulting in reduced aligning properties.

An optically active compound may be incorporated into the polymerizable composition, and the term "optically active compound" denotes one of two stereoisomers that have an asymmetric carbon atom in the molecule thereof and are mirror images of each other (i.e., enantiomers). From the physical aspect, the term means a compound capable of

rotating the plane of polarized light.

The polymerizable composition containing such an optically active compound provides a polymer having inside a helical structure of the liquid crystal skeleton, namely, a fixed cholesteric liquid crystal phase. The amount of the optically active compound, if used, is preferably 0.1 to 100 parts, more preferably 1 to 50 parts, by mass per 100 parts by mass of the sum of compounds (A) and (B). Examples of useful optically active compounds include compound Nos. 384 through 395 shown below.

[Chem. 64]

Compound No. 384

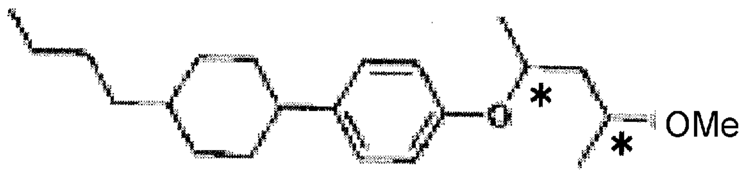

[Chem. 65]

Compound No. 385

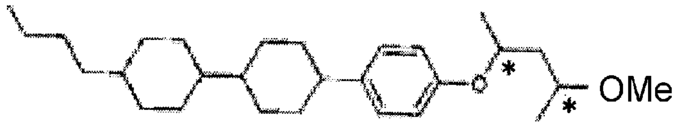

[Chem. 66]

Compound No. 386

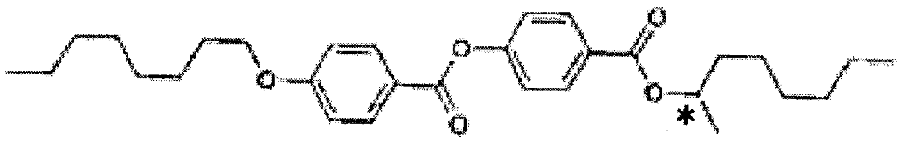

[Chem. 67]

Compound No. 387

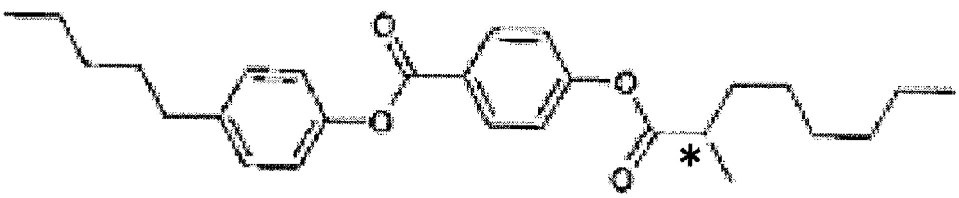

[Chem. 68]

Compound No. 388

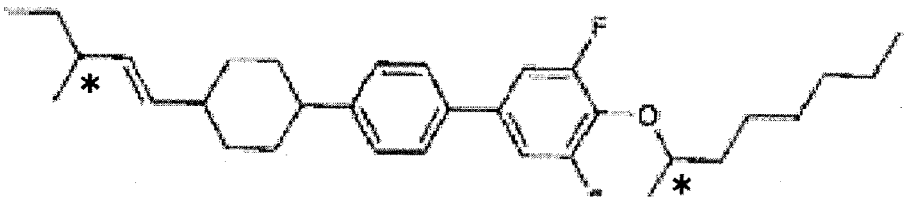

[Chem. 69]

Compound No. 389

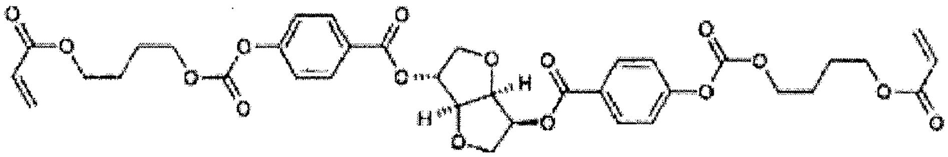

[Chem. 70]

Compound No. 390

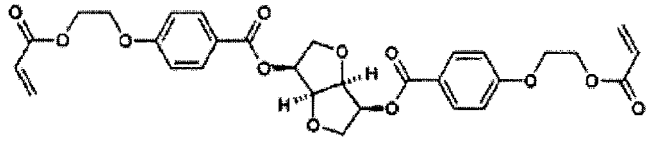

[Chem. 71]

Compound No. 391

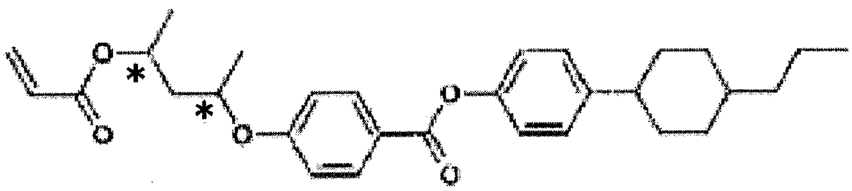

[Chem. 72]

Compound No. 392

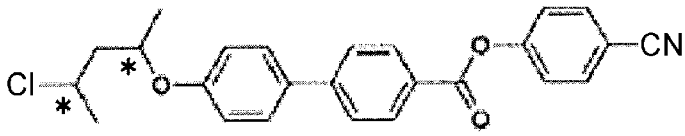

[Chem. 73]

Compound No. 393

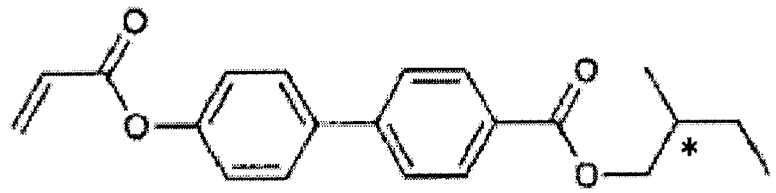

[Chem. 74]

Compound No. 394

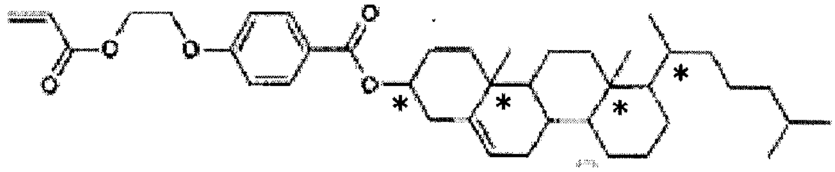

[Chem. 75]

Compound No. 395

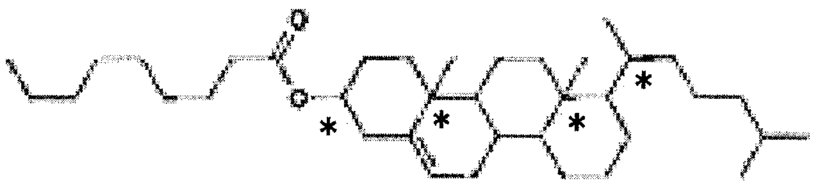

wherein the asterisk mark indicates an asymmetric carbon atom.

The polymerizable composition of the invention may further contain a surfactant that produces an excluded volume effect over the interface with air. The surfactant is preferably selected from those effective in facilitating applying the polymerizable composition to a substrate or controlling the alignment of the liquid crystal phase. Such surfactants include quaternary ammonium salts, alkylamine oxides, polyamine derivatives, polyoxyethylene-polyoxypropylene condensates, polyethylene glycol and esters thereof, sodium laurylsulfate, ammonium laurylsulfate, amine laurylsulfates, alkyl-substituted aromatic sulfonates, alkylphosphates, perfluoroalkylsulfonates, perfluoroalkylcarboxylates, perfluoroalkyl ethylene oxide adducts, and perfluoroalkyltrimethylammonium salts. A preferred amount of the surfactant to be used depends on the kind of the surfactant, the compounding ratio of the composition, and the like but generally ranges from 0.001 to 5 parts by mass, more preferably 0.01 to 1 part by mass, per 100 parts by mass of the sum of compounds (A) and (B).

Additives may be added to the polymerizable composition where needed to improve characteristics of the polymerizable composition, including functional compounds, such as storage stabilizers, antioxidants, ultraviolet absorbers, infrared absorbers, fine particles of organic, inorganic or other materials, and polymers.

The storage stabilizers serve to improve storage stability of the polymerizable composition, including hydroquinone, hydroquinone monoalkyl ethers, tert-butyl catechols, pyrogallols, thiophenols, nitro compounds, 2-naphtylamines, and 2-hydroxynaphthalenes. The amount of the storage stabilizer, if used, is preferably 1 part by mass or less, more preferably 0.5 parts by mass or less, per 100 parts by mass of the sum of compounds (A) and (B).

Any known antioxidants may be used, including hydroquinone, 2,6-di(t-butyl)-p-cresol, 2,6-di(t-butyl)phenol, triphenyl phosphite, and trialkyl phosphites.

Any known UV absorbers may be used, including those having UV absorbency by a compound such as salicylic

ester compounds, benzophenol compounds, benzotriazole compounds, cyanoacrylate compounds, and nickel complex salt compounds.

The fine particles may be used to adjust the optical (refractive index) anisotropy ($\Delta n$) or enhance the strength of a cured product. The fine particles may be of inorganic, organic, or metallic materials. The particle size is preferably 0.001 to 0.1 $\mu$m, more preferably 0.001 to 0.05 $\mu$m, to prevent flocculation. The particle size distribution is preferably narrow. The amount of the particles, if used, is preferably 0.1 to 30 parts by mass per 100 parts by mass of the sum of compounds (A) and (B).

The inorganic materials include ceramics, fluorophlogopite, fluorotetrasilicic mica, taeiniolite, fluorovermiculite, fluorohectorite, hectorite, saponite, stevensite, montmorillonite, beidellite, kaolinite, fraipontite, ZnO, $TiO_2$, $CeO_2$, $Al_2O_3$, $F_{e2}O_3$,, $ZrO_2$, $MgF_2$, $SiO_2$, $SrCO_3$, $Ba(OH)_2$, $Ca(OH)_2$, $Ga(OH)_3$, $Al(OH)_3$, $Mg(OH)_2$ and $Zr(OH)_4$. Fine particles having optical anisotropy exemplified by needle-like crystals of calcium carbonate may be used to adjust the optical anisotropy of the polymer.

The organic materials include carbon nanotube, fullerene, dendrimer, polyvinyl alcohol, polymethacrylate, and polyimide.

The polymer as an additive may be used to adjust the electric characteristics or alignment characteristics of the cured product. The polymer is preferably soluble in the above recited solvent. Examples of such a polymer include polyamide, polyurethane, polyurea, polyepoxide, polyester, and polyester polyol.

A method for producing a cured product using the polymerizable composition of the invention will then be described.

The cured product of the invention is obtained by, for example, dissolving the polymerizable composition in a solvent, applying the resulting solution to a substrate, removing the solvent from the coating film in which the liquid crystal molecules of the polymerizable composition have been aligned, and then irradiating the coating film with energy rays to cause polymerization.

Examples of preferred substrates include, but are not limited to, plates of glass, polyethylene terephthalate, polycarbonate, polyimide, polyamide, polymethyl methacrylate, polystyrene, polyvinyl chloride, polytetrafluoroethylene, cellulose, or silicone, a reflector plate, and a calcite plate. It is particularly preferred to use a substrate obtained by forming a polyimide alignment layer or a polyvinyl alcohol alignment layer on such a plate as described above.

The polymerizable composition solution can be applied to the substrate by any known coating techniques including curtain coating, extrusion coating, roll coating, spin coating, dipping, bar coating, spraying, slide coating, printing, and casting. The thickness of the cured film is decided as appropriate to the end use, and is preferably 0.05 to 30 $\mu$m, more preferably 0.01 to 20 $\mu$m, even more preferably 0.05 to 15 $\mu$m.

The liquid crystal molecules in the polymerizable composition are aligned by, for example, previously subjecting the substrate to an alignment treatment. Such an alignment treatment of the substrate is preferably carried out by providing a liquid crystal alignment layer, such as a polyimide alignment layer, a polyamide alignment layer, or a polyvinyl alcohol alignment layer, on the substrate, followed by rubbing the alignment layer or a like operation. Molecular alignment may also be achieved by applying a magnetic field or an electric field to the polymerizable composition applied to the substrate.

The method comprising aligning the liquid crystal molecules by the above process and then curing the polymerizable composition by the process described below is preferable for obtaining a cured product with well-controlled liquid crystal alignment.

The polymerizable composition can be polymerized by any known processes using light, electromagnetic radiation, or heat. Light or electromagnetic radiation-induced polymerization reactions include radical polymerization, anionic polymerization, cationic polymerization, coordination polymerization, and living polymerization. These reactions easily achieve polymerization under a condition that allows the polymerizable composition to exhibit a liquid crystal phase. Crosslinking reaction in a magnetic field or an electric field is also preferred. The liquid crystal (co)polymer formed on the substrate may be used as such or, when needed, stripped off the substrate or transferred onto a different substrate.

Examples of the light include ultraviolet light, visible light, and infrared light. Electromagnetic radiation, such as electron beams and X rays, may sometimes be used. Usually, ultraviolet light or visible light is preferred. A preferred wavelength range is from 150 to 500 nm, more preferably from 250 to 450 nm, even more preferably 300 to 400 nm. Light sources include low pressure mercury lamps (e.g., bactericidal lamps, fluorescent chemical lamps, and black lights), high pressure discharge lamps (e.g., high pressure mercury lamps and metal halide lamps), and short arc discharge lamps (e.g., ultrahigh pressure mercury lamps, xenon lamps, and mercury xenon lamps), with ultrahigh pressure mercury lamps being preferred. The polymerizable composition may be irradiated with the light as emitted from a light source or a light ray of a specific wavelength (or light rays of a specific wavelength range) selected through a filter. A preferred irradiation energy density is 2 to 5000 $mJ/cm^2$, more preferably 10 to 3000 $mJ/cm^2$, even more preferably 100 to 2000 $mJ/cm^2$. A preferred illuminance is 0.1 to 5000 $mW/cm^2$, more preferably 1 to 2000 $mW/cm^2$. The temperature during irradiation may be decided so that the polymerizable composition may exhibit a liquid crystal phase and is preferably 100°C or lower. At temperatures at 100°C or higher, thermal polymerization can occur, resulting in a failure

to obtain satisfactory alignment.

The cured product as claimed by the invention is a cured product of the polymerizable composition of the invention. The method for producing the cured product of the invention may be as described hereinbefore. The cured product of the invention is usable as a molded article having optical anisotropy. Such a molded article finds use preferably as optical films for displays, typically including a retardation film (e.g., a 1/2-wave plate or a 1/4-wave plate), a polarizer, a dichroic polarizing film, a liquid crystal alignment layer, an antireflective film, a selectively reflecting film, and a viewing angle compensation film. The molded article also finds use as an optical lens, such as a liquid crystal lens or a microlens, and an information recording material, such as a polymer dispersed liquid crystal (PDLC) type e-paper or digital paper.

Examples

The present invention will now be illustrated in greater detail by way of Examples and Comparative Examples, but it should be understood that the invention is not deemed to be limited thereby.

Examples 1 to 4 and Comparative Examples 1 to 4

In 4.0 g of 2-butanone was dissolved 1.0 g of compound No. 1 or No. 6. To the solution was added 0.03 g of compound No. 101 or Reference compound No. 235 or each of comparative compound Nos. 1 to 4 and completely dissolved. The resulting solution was filtered through a filter having a pore size of 0.45 μm to prepare polymerizable compositions of Examples 1 to 4 and Comparative Examples 1 to 4. The combinations of compounds are shown in Table 1 below.

Reference Compound No. 235

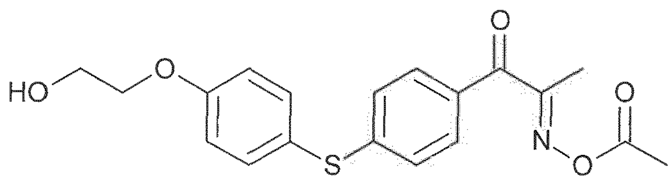

[Chem. 76]

Comparative Compound No. 1

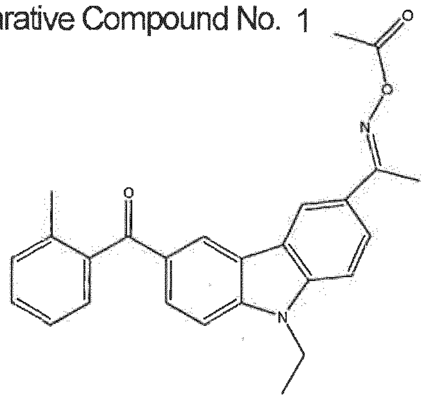

[Chem. 77]

Comparative Compound No. 2

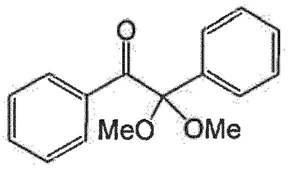

[Chem. 78]

Comparative Compound No. 3

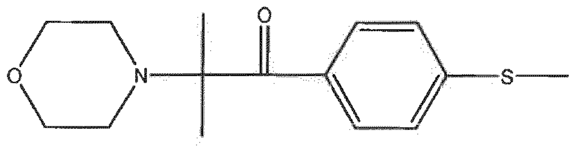

[Chem. 8]

Comparative Compound No. 4

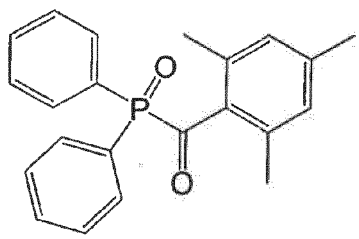

Table 1

| | Polymerizable Composition | Compound (A) | Compound (B) |
|---|---|---|---|
| Example 1 | polymerization composition No. 1 | compound No. 1 | compound No. 1 0 1 |
| Reference Example 2 | polymerization composition No. 2 | compound No. 1 | compound No. 235 |
| Example 3 | polymerization composition No. 3 | compound No. 6 | compound No. 101 |
| Reference Example 4 | polymerization composition No. 4 | compound No. 6 | compound No. 235 |
| Comparative Example 1 | comparative polymerization composition No. 1 | compound No. 1 | comparative compound No. 1 |
| Comparative Example 2 | comparative polymerization composition No. 2 | compound No. 1 | comparative compound No. 2 |
| Comparative Example 3 | comparative polymerization composition No. 3 | compound No. 1 | comparative compound No. 3 |

(continued)

| | Polymerizable Composition | Compound (A) | Compound (B) |
|---|---|---|---|
| Comparative Example 4 | comparative polymerization composition No. 4 | compound No. 1 | comparative compound N o. 4 |

Evaluation Examples 1 to 4 and Comparative Evaluation Examples 1 to 4

Each of the polymerizable composition Nos. 1 to 4 and comparative polymerizable composition Nos. 1 to 4 was applied to a glass substrate using a spin coater at 500 rpm for 2 seconds and then at 900 rpm for 5 seconds. The coating film was prebaked on a hot plate at 90°C for 90 seconds, allowed to cool at 23°C for 40 seconds, and then irradiated with light of a high pressure mercury lamp to give an energy of 100 $mJ/cm^2$ to make a sample film for evaluation. The light transmittance at 400 nm of the sample was determined. A sample having the transmittance of 97% or higher was rated A, and a sample with the transmittance of lower than 97% was rated B. Samples rated A are superior for uses typified by optical films for displays. The results of evaluation are shown in Table 2.

Table 2

| | Polymerizable Composition | Transmittance |
|---|---|---|
| Evaluation Example 1 | polymerizable composition No. 1 | A |
| Reference Evaluation Example 2 | polymerizable composition No. 2 | A |
| Evaluation Example 3 | polymerizable composition No. 3 | A |
| Reference Evaluation Example 4 | polymerizable composition No. 4 | A |
| Comparative Evaluation Example 1 | comparative polymerizable composition No. 1 | B |
| Comparative Evaluation Example 2 | comparative polymerizable composition No. 2 | A |
| Comparative Evaluation Example 3 | comparative polymerizable composition No. 3 | A |
| Comparative Evaluation Example 4 | comparative polymerizable composition No. 4 | A |

It is apparent from Tables land 2 that the cured product obtained by using comparative compound No. 1 has a low light transmittance while the cured products obtained by using each of compound Nos. 101 and 235 and comparative compound Nos. 2 to 4 have a satisfactory light transmittance.

Evaluation Examples 5 to 8 and Comparative Evaluation Examples 5 to 7

Each of the polymerizable composition Nos. 1 to 4 and comparative polymerizable composition Nos. 2 to 4 was applied to a polyimide-coated and rubbed glass substrate with a spin coater. The coating film was dried on a hot plate at 100°C for 3 minutes, allowed to cool to room temperature for 3 minutes, and irradiated with light of a high pressure mercury lamp (120 W/cm) for 20 seconds to obtain a polymer film as a cured product of the polymerizable composition (the speed and time of rotation of the spin coater were adjusted so as to give a film thickness of about 1 $\mu$m). Each cured film was evaluated as follows.

(a) Alignment properties

The optical texture of the surface of the cured film was observed using a polarizing microscope OPTIPHOT2-POL (from Nikon). A sample showing uniform alignment with no alignment defects was rated A. A sample having a transparent surface but with partial alignment non-uniformity was rated B. A sample showing crystallization or alignment non-uniformity was rated C. Samples rated A are preferred for uses typified by optical films for displays.

(b) Curing properties

The surface curing properties of the cured film were observed with the naked eye. A sample showing uniform cure with no tack left was rated A. A sample showing uniform cure but with a slight tack left was rated B. A sample having a tack all over the surface was rated C. Samples rated A are desirable for uses typified by optical films for displays.

(c) Heat resistance

The retardation of the cured film was determined through birefringence measurement in accordance with the Senarmont method using a polarizing microscope OPTIPHOT2-POL (from Nikon) at room temperature (25°C) at a wavelength of 546 nm. Then the cured film was left to stand in an oven at 150°C for 30 minutes and then cooled to room temperature, and the retardation of the heat treated film was determined in the same manner as above. The change in retardation due to the heating was calculated according to the formula below. A sample showing a smaller change in retardation, which indicates a smaller change in optical physical properties, has higher heat resistance.

Change in retardation (%) = 100 – (retardation after heating/retardation before heating x 100)

Table 3

| | Polymerizable Composition | Alignment Properties | Curing Properties | Heat Resistance |
|---|---|---|---|---|
| Evaluation Example 5 | polymerizable composition No. 1 | A | A | <0.1 |
| Evaluation Example 6 | polymerizable composition No. 2 | A | A | 0.1 |
| Evaluation Example 7 | polymerizable composition No. 3 | A | A | 1.2 |
| Evaluation Example 8 | polymerizable composition No. 4 | A | A | 1.6 |
| Compara. Evaluation Example 5 | compara. polymerizable composition No. 2 | A | C | 5.6 |
| Compara. Evaluation Example 6 | compara. polymerizable composition No. 3 | A | B | 2.5 |
| Compara. Evaluation Example 7 | compara. polymerizable composition No. 4 | A | B | 2.0 |

As can be seen from Tables 1 and 3, the polymerizable compositions of Comparative Evaluation Examples 5 to 7 have low curing properties and, after cure, suffer from a great change in retardation in the heat resistance test. These comparative polymerizable compositions were thus confirmed to be inferior in curing properties and heat resistance.

To the contrary, the polymerizable compositions of the invention (Evaluation Examples 5 to 8) uniformly cure with uniform alignment properties and suffer only minimal change of retardation in the heat resistance test. The polymerizable compositions of the invention were thus confirmed to be superior in curing properties, alignment properties, and heat resistance. In particular, the polymerizable compositions containing compound No. 1 as compound (A) prove excellent in heat resistance.

It has now been proved that the polymerizable composition of the invention and a cured product obtained therefrom are beneficial for use as optical films for displays.

Industrial Applicability

The polymerizable composition of the invention is excellent in curing properties, especially photocuring properties, solvent solubility, and compatibility with other liquid crystal compounds. The cured product of the invention, which is obtained by photopolymerizing the polymerizable composition while being in a liquid crystal phase under alignment control, is excellent in alignment control properties, transparency, heat resistance, and the like and is particularly useful as an optical film for displays.

## Claims

**1.** A polymerizable composition comprising:

(A) a compound represented by general formula (I) below and

(B) at least one compound having an indole structure and an oxime ester group represented by general formula (III) below:

[Chem. 1]

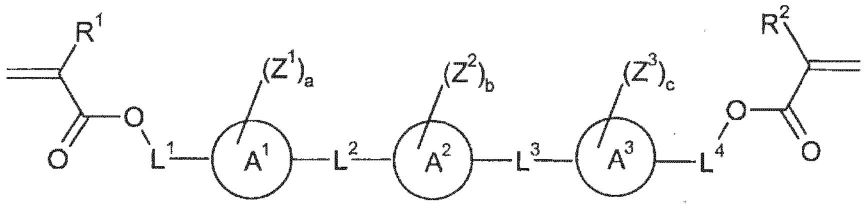

(I)

wherein $R^1$ and $R^2$ each independently represent a hydrogen atom, a methyl group, or a halogen atom; ring $A^1$, ring $A^2$, and ring $A^3$ each independently represent a benzene ring, a cyclohexane ring, a cyclohexene ring, a naphthalene ring, or a phenanthrene ring, the -CH= moiety of each of these rings being optionally replaced by -N=, and the methylene moiety of each of these rings being optionally replaced by -S- or -O-; $Z^1$, $Z^2$, and $Z^3$ each independently represent a cyano group, a halogen atom, or a C1-C8 alkyl group, the hydrogen atom of the alkyl group being optionally replaced by a halogen atom or a cyano group, and the methylene moiety of the alkyl group being optionally replaced by -O- or -CO- provided that no two oxygen atoms are directly connected to each other;

$L^1$ and $L^2$ each independently represent a direct bond, -COO-, $-(CE_2)_p-$, -CE=CE-, $-(CE_2)_pO-$, $-CE=CECE_2O-$, -C=C-, $-(CE_2)pCOO-$, $-(CE_2)_pOCO-O-$, or $-(CE_2)_qO(CE_2)_rO-$; $L^3$ and $L^4$ each independently represent a direct bond, -OCO-, $-(CE_2)_p-$, -CE=CE-, $-O(CE_2)_p-$, $-OCE_2CE=CE-$, -C=C-, $-OCO(CE_2)_p-$, $-OCO-O(CE_2)_p-$, or $-O(CE_2)_qO(CE_2)_r-$, wherein E in $L^1$ and $L^4$ represents a hydrogen atom, a methyl group, or an ethyl group; E in $L^2$ and $L^3$ represents a hydrogen atom; and the plurality of E's are the same or different from each other;

a, b, and c are the numbers of the substituents on ring $A^1$, $A^2$, and $A^3$, respectively, each independently representing an integer of 0 to (2t + 2), wherein t is the number of 6-membered rings contained in the substituted monocyclic or fused ring, provided that b is 1 or greater;

p represents an integer of 1 to 8; and

q and r each independently represent an integer of 1 to 3;

[Chem. 3]

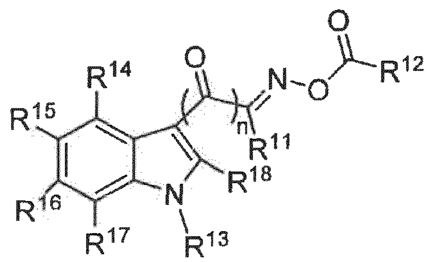

(III)

wherein $R^{11}$ and $R^{12}$ each independently represent $R^{21}$, $OR^{21}$, $COR^{21}$, $SR^{21}$, $CONR^{22}R^{23}$, or CN;

$R^{21}$, $R^{22}$, and $R^{23}$ each independently represent a hydrogen atom, a C1-C30 hydrocarbon group, or a C2-C20 group containing a heterocyclic ring, the hydrogen atom of the groups $R^{21}$, $R^{22}$, and $R^{23}$ being optionally replaced by $R^{31}$, $OR^{31}$, $COR^{31}$, $SR^{31}$, $NR^{32}R^{33}$, $CONR^{32}R^{33}$, $-NR^{32}-OR^{33}$, $-NCOR^{32}-OCOR^{33}$, $NR^{32}COR^{31}$, $OCOR^{31}$, $SCOR^{31}$, $OCSR^{31}$, $COSR^{31}$, $CSOR^{31}$, a hydroxy group, a nitro group, CN, a halogen atom, or $COOR^{31}$.,

$R^{31}$, $R^{32}$, and $R^{33}$ each independently represent a hydrogen atom, a C1-C30 hydrocarbon group, or a C2-C20 group containing a heterocyclic ring, the hydrogen atom of the groups $R^{31}$, $R^{32}$, $R^{33}$ being optionally replaced by a hydroxy group, a nitro group, CN, a halogen atom, or a carboxyl group, and the methylene moiety of the groups $R^{21}$, $R^{22}$, $R^{23}$, $R^{31}$, $R^{32}$, and $R^{33}$ being optionally replaced by -O-, -S-, -COO-, -OCO-, $-NR^{34}-$, $-NR^{34}COO-$, $-OCONR^{34}-$, -SCO-, -COS-, -OCS-, or -CSO- provided that no two oxygen atoms are directly connected to each other;

$R^{34}$ represents a hydrogen atom, a C1-C30 hydrocarbon group, or a C2-C20 group containing a heterocyclic ring;

$R^{13}$ represents a hydrogen atom, a C1-C30 hydrocarbon group, or a C2-C20 group containing a heterocyclic ring, the combination of $R^{13}$ and $R^{17}$, the combination of $R^{13}$ and $R^{18}$, the combination of $R^{14}$ and $R^{15}$, the combination of $R^{15}$ and $R^{16}$, and the combination of $R^{16}$ and $R^{17}$ each, taken together, optionally forming a ring, and the hydrogen atom of the group $R^{13}$ being optionally replaced by $R^{31}$, $OR^{31}$, $COR^{31}$, $SR^{31}$, $NR^{32}R^{33}$, $CONR^{32}R^{33}$, $-NR^{32}-OR^{33}$, $-NCOR^{32}-OCOR^{33}$, $NR^{32}COR^{31}$, $OCOR^{31}$, $SCOR^{31}$, $OCSR^{31}$, $COSR^{31}$, $CSOR^{31}$, a hydroxy group, a nitro group, CN, a halogen atom, or $COOR^{31}$;
$R^{14}$, $R^{15}$, $R^{16}$, and $R^{17}$ each independently represent $R^{21}$, $OR^{21}$, $SR^{21}$ , $COR^{24}$, $CONR^{25}R^{26}$, $NR^{22}COR^{21}$, $OCOR^{21}$, $COOR^{24}$, $SCOR^{21}$, $OCSR^{21}$, $COSR^{24}$, $CSOR^{21}$, a hydroxy group, CN, or a halogen atom;
$R^{24}$, $R^{25}$, and $R^{26}$ each independently represent a hydrogen atom or a C1-C20 alkyl group;
$R^{18}$ represents $R^{21}$, $OR^{21}$, $SR^{21}$, $COR^{21}$, $CONR^{22}R^{23}$, $NR^{22}COR^{21}$, $OCOR^{21}$, $COOR^{21}$, $SCOR^{21}$, $OCSR^{21}$, $COSR^{21}$, $CSOR^{21}$, a hydroxy group, CN, or a halogen atom; and
n represents 0 or 1.

2. The polymerizable composition according to claim 1, wherein compound (A) is a compound represented by general formula (II):

[Chem. 2]

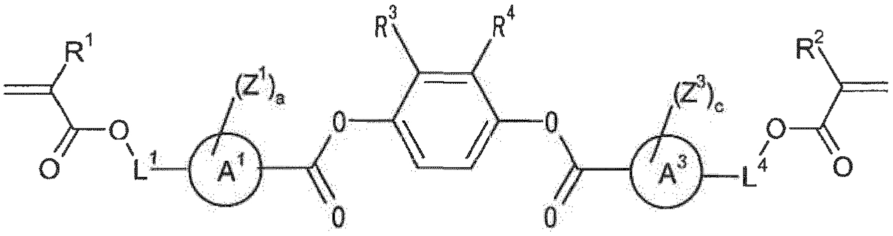

(II)

wherein $R^1$, $R^2$, $L^1$, $L^4$, ring $A^1$, ring $A^3$, $Z^1$, $Z^3$, a, and c are as defined in claim 1;
$R^3$ and $R^4$ each independently represent a hydrogen atom, a halogen atom, a cyano group, or a C1-C8 alkyl group provided that at least one of $R^3$ and $R^4$ is a substituent other than a hydrogen atom, the hydrogen atom of the alkyl group being optionally replaced by a halogen atom or a cyano group, and the methylene moiety of the alkyl group being optionally replaced by -O- or -CO- provided that no two oxygen atoms are directly connected to each other.

3. The polymerizable composition according to claim 1 or 2, wherein compound (A) satisfies at least one of conditions (a) and (b) below:

Condition (a): $L^1$ is a group represented by $-(CH_2)_p-$, -CH=CH-, $-(CH_2)_pO-$, $-CH=CHCH_2O-$, $-(CH_2)_pCOO-$, $-(CH_2)_pOCO-O-$, or $-(CH_2)_qO(CH_2)_rO-$,
Condition (b): $L^4$ is a group represented by $-(CH_2)_p-$, -CH=CH-, $-O(CH_2)_p-$, $-OCH_2CH=CH-$, $-OCO(CH_2)_p-$, $-OCO-O(CH_2)_p-$, or $-O(CH_2)_qO(CH_2)_r-$,

wherein p represents an integer of 1 to 8; and q and r each independently represent an integer ofl to 3.

4. The polymerizable composition according to any one of claims 1 to 3, wherein ring $A^1$ and ring $A^3$ in compound (A) each independently represent a benzene ring or a naphthalene ring.

5. The polymerizable composition according to any one of claims 1 to 4, wherein $L^1$ and $L^4$ in formula (I) are asymmetric.

6. The polymerizable composition according to any one of claims 1 to 5, further comprising an optically active compound.

7. A method for producing a cured product, comprising using the polymerizable composition according to any one of claims 1 to 6.

8. A cured product obtained from the polymerizable composition according to any one of claims 1 to 6.

9. An optical film for displays, comprising the cured product according to claim 8.

**10.** The polymerizable composition according to any one of claims 1 to 6, further comprising a liquid crystal compound other than compound (A) in an amount of 50 parts by mass or less per 100 parts by mass of the sum of compounds (A) and (B).

**11.** The polymerizable composition according to any one of claims 1 to 6, wherein at least one of ring $A^1$ and ring $A^3$ is a naphthalene ring.

**Patentansprüche**

**1.** Polymerisierbare Zusammensetzung, umfassend:

(A) eine Verbindung, dargestellt durch die allgemeine Formel (I) unten und
(B) mindestens eine Verbindung mit einer Indolstruktur und einer Oximestergruppe, dargestellt durch die nachstehende allgemeine Formel (III):

[Chem. 1]

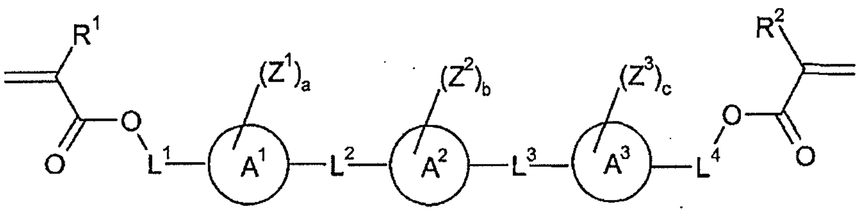

(I)

worin $R^1$ und $R^2$ jeweils unabhängig voneinander ein Wasserstoffatom, eine Methylgruppe oder ein Halogenatom darstellen;
Ring $A^1$, Ring $A^2$ und Ring $A^3$ jeweils unabhängig voneinander einen Benzolring, einen Cyclohexanring, einen Cyclohexenring, einen Naphthalinring oder einen Phenanthrenring darstellen, wobei die -CH=-Einheit jedes dieser Ringe gegebenenfalls durch -N= ersetzt wird und die Methyleneinheit jedes dieser Ringe gegebenenfalls durch -S- oder -O- ersetzt wird;
$Z^1$, $Z^2$ und $Z^3$ jeweils unabhängig voneinander eine Cyanogruppe, ein Halogenatom oder eine C1-C8-Alkylgruppe darstellen, wobei
das Wasserstoffatom der Alkylgruppe gegebenenfalls durch ein Halogenatom oder eine Cyanogruppe ersetzt ist und die Methyleneinheit der Alkylgruppe gegebenenfalls durch -O- oder -CO- ersetzt wird, vorausgesetzt, dass keine zwei Sauerstoffatome direkt miteinander verbunden sind;
$L^1$ und $L^2$ jeweils unabhängig voneinander eine direkte Bindung, -COO-, $-(CE_2)_p-$ , -CE=CE-, $-(CE_2)_pO-$, $-CE=CECE_2O-$, -C=C-, - $(CE_2)_pCOO-$, $-(CE_2)_pOCO-O-$ oder $-(CE_2)_qO(CE_2)_rO-$ darstellen; $L^3$ und $L^4$ jeweils unabhängig voneinander eine direkte Bindung, - OCO-, $-(CE_2)_p-$, -CE=CE-, $-O(CE_2)_p-$, $-OCE_2CE=CE-$, -C=C-, - $OCO(CE_2)_p-$ , $-OCO-O(CE_2)_p-$ oder $-O(CE_2)_qO(CE_2)_r-$ darstellen, wobei E in $L^1$ und $L^4$ ein Wasserstoffatom, eine Methylgruppe oder eine Ethylgruppe darstellt; E in $L^2$ und $L^3$ ein Wasserstoffatom darstellt; und die Vielzahl von E's gleich oder verschieden voneinander ist;
a, b und c die Zahlen der Substituenten am Ring $A^1$, $A^2$ bzw. $A^3$ sind, die jeweils unabhängig voneinander eine ganze Zahl von 0 bis (2t + 2) darstellen, wobei t die Anzahl der 6-gliedrigen Ringe ist, die in dem substituierten monocyclischen oder kondensierten Ring enthalten ist, vorausgesetzt, dass b 1 oder größer ist;
p eine ganze Zahl von 1 bis 8 darstellt; und
q und r jeweils unabhängig voneinander eine ganze Zahl von 1 bis 3 darstellen;

[Chem. 3]

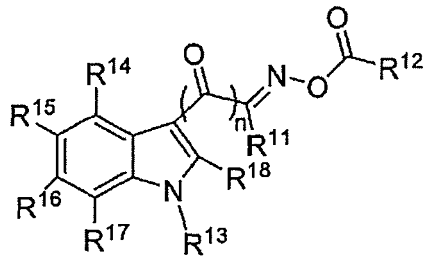

(III)

wobei $R^{11}$ und $R^{12}$ jeweils unabhängig voneinander $R^{21}$, $OR^{21}$, $COR^{21}$, $SR^{21}$, $CONR^{22}R^{23}$ oder CN darstellen; $R^{21}$, $R^{22}$ und $R^{23}$ jeweils unabhängig voneinander ein Wasserstoffatom, eine C1-C30-Kohlenwasserstoffgruppe oder eine C2-C20-Gruppe darstellen, die einen heterocyclischen Ring enthält, wobei das Wasserstoffatom der Gruppen $R^{21}$, $R^{22}$ und $R^{23}$ gegebenenfalls durch $R^{31}$, $OR^{31}$, $COR^{31}$, $SR^{31}$, $NR^{32}R^{33}$, $CONR^{32}R^{33}$, - $NR^{32}$-$OR^{33}$, -$NCOR^{32}$-$OCOR^{33}$, $NR^{32}COR^{31}$, $OCOR^{31}$, $SCOR^{31}$, $OCSR^{31}$, $COSR^{31}$, $CSOR^{31}$, eine Hydroxygruppe, eine Nitrogruppe, CN, ein Halogenatom oder $COOR^{31}$ ersetzt ist;
$R^{31}$, $R^{32}$ und $R^{33}$ jeweils unabhängig voneinander ein Wasserstoffatom, eine C1-C30-Kohlenwasserstoffgruppe oder eine C2-C20-Gruppe darstellen, die einen heterocyclischen Ring enthält, wobei das Wasserstoffatom der Gruppen $R^{31}$, $R^{32}$, $R^{33}$ gegebenenfalls durch eine Hydroxygruppe, eine Nitrogruppe, CN, ein Halogenatom oder eine Carboxylgruppe ersetzt ist und die Methyleneinheit der Gruppen $R^{21}$, $R^{22}$, $R^{23}$, $R^{31}$, $R^{32}$ und $R^{33}$ gegebenenfalls durch -O-, -S-, -COO- ersetzt, -OCO-, -$NR^{34}$-, - $NR^{34}$COO-, -$OCONR^{34}$-, -SCO-, -COS-, -OCS- oder -CSO- ersetzt werden, vorausgesetzt, dass keine zwei Sauerstoffatome direkt miteinander verbunden sind;
$R^{34}$ ein Wasserstoffatom, eine C1-C30-Kohlenwasserstoffgruppe oder eine C2-C20-Gruppe darstellt, die einen heterocyclischen Ring enthält;
$R^{13}$ ein Wasserstoffatom, eine C1-C30-Kohlenwasserstoffgruppe oder eine C2-C20-Gruppe darstellt, die einen heterocyclischen Ring enthält;
die Kombination von $R^{13}$ und $R^{17}$, die Kombination von $R^{13}$ und $R^{18}$, die Kombination von $R^{14}$ und $R^{15}$, die Kombination von $R^{15}$ und $R^{16}$ und die Kombination von $R^{16}$ und $R^{17}$ jeweils zusammen gegebenenfalls einen Ring bilden, und das Wasserstoffatom der Gruppe $R^{13}$ optional durch $R^{31}$, $OR^{31}$, $COR^{31}$, $SR^{31}$, $NR^{32}R^{33}$, $CONR^{32}R^{33}$, -$NR^{32}$-$OR^{33}$, -$NCOR^{32}$-$OCOR^{33}$, $NR^{32}COR^{31}$, $OCOR^{31}$, $SCOR^{31}$, $OCSR^{31}$, $COSR^{31}$, $CSOR^{31}$, eine Hydroxygruppe, eine Nitrogruppe, CN ein Halogenatom oder $COOR^{31}$ ersetzt wird;
$R^{14}$, $R^{15}$, $R^{16}$ und $R^{17}$ jeweils unabhängig voneinander $R^{21}$, $OR^{21}$, $SR^{21}$, $COR^{24}$, $CONR^{25}R^{26}$, $NR^{22}COR^{21}$, $OCOR^{21}$, $COOR^{24}$, $SCOR^{21}$, $OCSR^{21}$, $COSR^{24}$, $CSOR^{21}$, eine Hydroxygruppe, CN oder ein Halogenatom darstellen;
$R^{24}$, $R^{25}$ und $R^{26}$ jeweils unabhängig voneinander ein Wasserstoffatom oder eine C1-C20-Alkylgruppe darstellen;
$R^{18}$ $R^{21}$, $OR^{21}$, $SR^{21}$, $COR^{21}$, $CONR^{22}R^{23}$, $NR^{22}COR^{21}$, $OCOR^{21}$, $COOR^{21}$, $SCOR^{21}$, $OCSR^{21}$, $COSR^{21}$, $CSOR^{21}$, eine Hydroxygruppe, CN oder ein Halogenatom darstellt; und
n für 0 oder 1 steht.

2. Polymerisierbare Zusammensetzung nach Anspruch 1, wobei Verbindung (A) eine Verbindung ist, die durch die allgemeine Formel (II) dargestellt wird:

[Chem. 2]

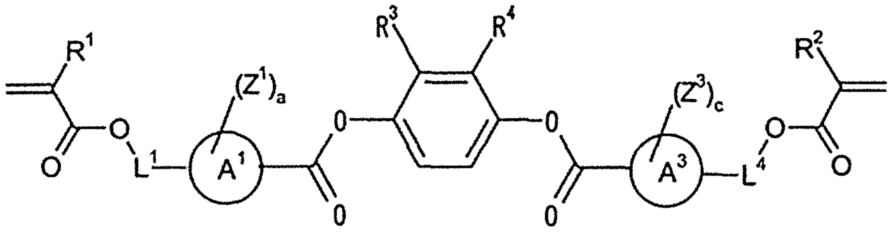

(II)

worin $R^1$, $R^2$, $L^1$, $L^4$, Ring $A^1$, Ring $A^3$, $Z^1$, $Z^3$, a und c wie in Anspruch 1 definiert sind;

$R^3$ und $R^4$ jeweils unabhängig voneinander ein Wasserstoffatom, ein Halogenatom, eine Cyanogruppe oder eine C1-C8-Alkylgruppe darstellen, vorausgesetzt, dass mindestens eines von $R^3$ und $R^4$ ein anderer Substituent als ein Wasserstoffatom ist, das Wasserstoffatom der Alkylgruppe gegebenenfalls durch ein Halogenatom oder eine Cyanogruppe ersetzt ist und die Methyleneinheit der Alkylgruppe gegebenenfalls durch -O- oder -CO- ersetzt wird, vorausgesetzt, dass keine zwei Sauerstoffatome direkt miteinander verbunden sind.

3. Polymerisierbare Zusammensetzung nach Anspruch 1 oder 2, wobei Verbindung (A) mindestens eine der folgenden Bedingungen (a) und (b) erfüllt:

Bedingung (a): $L^1$ ist eine Gruppe, dargestellt durch $-(CH_2)_p-$, -CH=CH-, $-(CH_2)_pO-$, $-CH=CHCH_2O-$, $-(CH_2)_pCOO-$, $-(CH_2)_pOCO-O-$ oder $-(CH_2)qO(CH_2)_rO-$,
Bedingung (b): $L^4$ ist eine Gruppe, dargestellt durch $-(CH_2)_p-$, -CH=CH-, $-O(CH_2)_p-$, $-OCH_2CH=CH-$, $-OCO(CH_2)_p-$, $-OCO-O(CH_2)_p-$ oder $-O(CH_2)qO(CH_2)_r-$,

worin p eine ganze Zahl von 1 bis 8 darstellt; und q und r jeweils unabhängig voneinander eine ganze Zahl von 1 bis 3 darstellen.

4. Polymerisierbare Zusammensetzung nach einem der Ansprüche 1 bis 3, wobei Ring $A^1$ und Ring $A^3$ in Verbindung (A) jeweils unabhängig voneinander einen Benzolring oder einen Naphthalinring darstellen.

5. Polymerisierbare Zusammensetzung nach einem der Ansprüche 1 bis 4, wobei $L^1$ und $L^4$ in Formel (I) asymmetrisch sind.

6. Polymerisierbare Zusammensetzung nach einem der Ansprüche 1 bis 5, ferner umfassend eine optisch aktive Verbindung.

7. Verfahren zur Herstellung eines gehärteten Produkts, umfassend die Verwendung der polymerisierbaren Zusammensetzung nach einem der Ansprüche 1 bis 6.

8. Ausgehärtetes Produkt, erhalten aus der polymerisierbaren Zusammensetzung nach einem der Ansprüche 1 bis 6.

9. Optischer Film für Displays, umfassend das gehärtete Produkt nach Anspruch 8.

10. Polymerisierbare Zusammensetzung nach einem der Ansprüche 1 bis 6, ferner umfassend eine andere Flüssigkristallverbindung als Verbindung (A) in einer Menge von 50 Massenteilen oder weniger pro 100 Massenteile der Summe der Verbindungen (A) und B).

11. Polymerisierbare Zusammensetzung nach einem der Ansprüche 1 bis 6, wobei mindestens einer von Ring $A^1$ und Ring $A^3$ ein Naphthalinring ist.

**Revendications**

1. Composition polymérisable comprenant:

(A) un composé représenté par la formule Générale (I) ci-dessous et
(B) au moins un composé ayant une structure indole et un groupe oxime ester représenté par la formule générale (III) ci-dessous:

[Chem. 1]

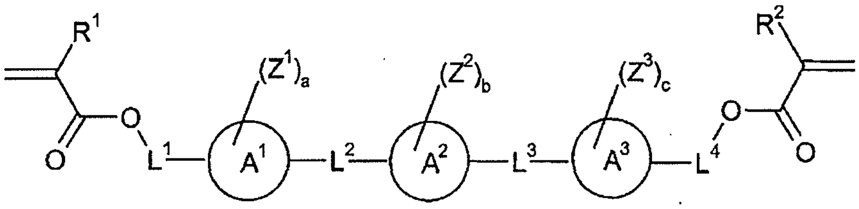

(I)

où $R^1$ et $R^2$ représentent chacun indépendamment un atome d'hydrogène, un groupe méthyle ou un atome d'halogène;

le cycle $A^1$, le cycle $A^2$ et le cycle $A^3$ représentent chacun indépendamment un cycle benzène, un cycle cyclohexane, un cycle cyclohexène, un cycle naphtalène ou un cycle phénanthrène, le groupement -CH= de chacun de ces cycles étant éventuellement remplacé par -N=, et le fragment méthylène de chacun de ces cycles étant éventuellement remplacé par -S- ou -O-;

$Z^1$, $Z^2$ et $Z^3$ représentent chacun indépendamment un groupe cyano, un atome d'halogène ou un groupe alkyle en C1-C8, l'atome d'hydrogène du groupe alkyle étant éventuellement remplacé par un atome d'halogène ou un groupe cyano, et le fragment méthylène du groupe alkyle étant éventuellement remplacé par -O- ou -CO- à condition qu'il n'y ait pas deux atomes d'oxygène directement liés l'un à l'autre;

$L^1$ et $L^2$ représentent chacun indépendamment une liaison directe, -COO-, $-(CE_2)_p-$, -CE=CE-, $-(CE_2)_pO-$, $-CE=CECE_2O-$, -C≡C-, $-(CE_2)_pCOO-$, $-(CE_2)_pOCO-O-$, ou $-(CE_2)_qO(CE_2)_rO-$; $L^3$ et $L^4$ représentent chacun indépendamment une liaison directe, -OCO-, $-(CE_2)_p-$, -CE=CE-, $-O(CE_2)_p-$, $-OCE_2CE=CE-$, -C≡C-, $-OCO(CE_2)_p-$, $-OCO-O(CE_2)_p-$, ou $-O(CE_2)_qO(CE_2)_r-$, où E dans $L^1$ et $L^4$ représente un atome d'hydrogène, un groupe méthyle ou un groupe éthyle; E dans $L^2$ et $L^3$ représente un atome d'hydrogène; et la pluralité de E's sont identiques ou différents les uns des autres;

a, b et c sont les nombres des substituants sur le cycle $A^1$, $A^2$ et $A^3$, respectivement, chacun représentant indépendamment un entier de 0 à (2t + 2), où t est le nombre de cycles à 6 chaînons contenus dans le un cycle monocyclique ou condensé substitué, à condition que b soit 1 ou plus;

p représente un entier de 1 à 8; et

q et r représentent chacun indépendamment un entier de 1 à 3;

[Chem. 3]

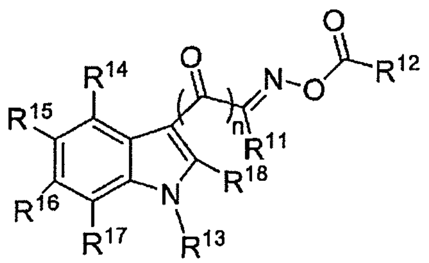

**(III)**

où $R^{11}$ et $R^{12}$ représentent chacun indépendamment $R^{21}$, $OR^{21}$, $COR^{21}$, $SR^{21}$, $CONR^{22}R^{23}$ ou CN;

$R^{21}$, $R^{22}$ et $R^{23}$ représentent chacun indépendamment un atome d'hydrogène, un groupe hydrocarboné en C1-C30 ou un groupe C2-C20 contenant un hétérocycle, l'atome d'hydrogène des groupes $R^{21}$, $R^{22}$ et $R^{23}$ étant éventuellement remplacé par $R^{31}$, $OR^{31}$, $COR^{31}$, $SR^{31}$, $NR^{32}R^{33}$, $CONR^{32}R^{33}$, $-NR^{32}-OR^{33}$, $-NCOR^{32}-OCOR^{33}$, $NR^{32}COR^{31}$, $OCOR^{31}$, $SCOR^{31}$, $OCSR^{31}$, $COSR^{31}$, $CSOR^{31}$, un groupe hydroxy, un groupe nitro, CN, un atome d'halogène, ou $COOR^{31}$;

$R^{31}$, $R^{32}$ et $R^{33}$ représentent chacun indépendamment un atome d'hydrogène, un groupe hydrocarboné en C1-C30, ou un groupe C2-C20 contenant un hétérocycle, l'atome d'hydrogène des groupes $R^{31}$, $R^{32}$, $R^{33}$ étant éventuellement remplacé par un groupe hydroxy, un groupe nitro, CN, un atome d'halogène ou un groupe carboxyle, et le fragment méthylène des groupes $R^{21}$, $R^{22}$, $R^{23}$, $R^{31}$, $R^{32}$ et $R^{33}$ étant éventuellement remplacé par -O-, -S-, -COO-, -OCO-, $-NR^{34}-$, $-NR^{34}COO-$, $-OCONR^{34}-$, -SCO-, -COS-, -OCS- ou -CSO- à condition qu'il

n'y ait pas deux atomes d'oxygène directement connectés l'un à l'autre; $R^{34}$ représente un atome d'hydrogène, un groupe hydrocarboné en C1-C30 ou un groupe en C2-C20 contenant un hétérocycle; $R^{13}$ représente un atome d'hydrogène, un groupe hydrocarboné en C1-C30 ou un groupe en C2-C20 contenant un hétérocycle, la combinaison de $R^{13}$ et $R^{17}$, la combinaison de $R^{13}$ et $R^{18}$, la combinaison de $R^{14}$ et $R^{15}$, la combinaison de $R^{15}$ et $R^{16}$, et la combinaison de $R^{16}$ et $R^{17}$ chacun, pris ensemble, formant éventuellement un cycle, et l'atome d'hydrogène de le groupe $R^{13}$ étant éventuellement remplacé par $R^{31}$, $OR^{31}$, $COR^{31}$, $SR^{31}$, $NR^{32}R^{33}$, $CONR^{32}R^{33}$, $-NR^{32}-OR^{33}$, $-NCOR^{32}-OCOR^{33}$, $NR^{32}COR^{31}$, $OCOR^{31}$, $SCOR^{31}$, $OCSR^{31}$, $COSR^{31}$, $CSOR^{31}$, un groupe hydroxy, un groupe nitro, CN, un atome d'halogène ou $COOR^{31}$; $R^{14}$, $R^{15}$, $R^{16}$ et $R^{17}$ représentent chacun indépendamment $R^{21}$, $OR^{21}$, $SR^{21}$, $COR^{24}$, $CONR^{25}R^{26}$, $NR^{22}COR^{21}$, $OCOR^{21}$, $COOR^{24}$, $SCOR^{21}$, $OCSR^{21}$, $COSR^{24}$, $CSOR^{21}$, un groupe hydroxy, CN ou un atome d'halogène; $R^{24}$, $R^{25}$ et $R^{26}$ représentent chacun indépendamment un atome d'hydrogène ou un groupe alkyle en C1-C20; $R^{18}$ représente $R^{21}$, $OR^{21}$, $SR^{21}$, $COR^{21}$, $CONR^{22}R^{23}$, $NR^{22}COR^{21}$, $OCOR^{21}$, $COOR^{21}$, $SCOR^{21}$, $OCSR^{21}$, $COSR^{21}$, $CSOR^{21}$, un groupe hydroxy, CN ou un atome d'halogène; et n représente 0 ou 1.

**2.** Composition polymérisable selon la revendication 1, dans laquelle le composé (A) est un composé représenté par la formule générale (II): [Chem. 2]

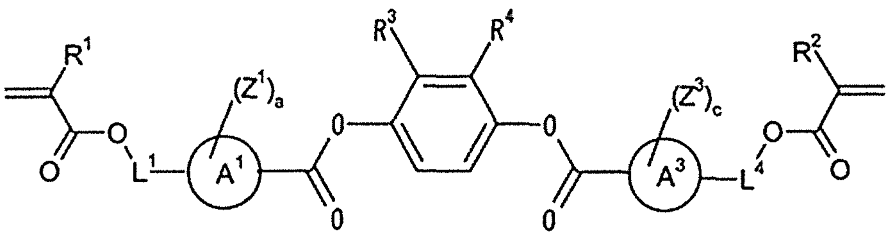

(II)

dans lequel $R^1$, $R^2$, $L^1$, $L^4$, le cycle $A^1$, le cycle $A^3$, $Z^1$, $Z^3$, a et c sont tels que définis dans la revendication 1; $R^3$ et $R^4$ représentent chacun indépendamment un atome d'hydrogène, un atome d'halogène, un groupe cyano ou un groupe alkyle en C1-C8 à condition qu'au moins l'un de $R^3$ et $R^4$ soit un substituant autre qu'un atome d'hydrogène, l'atome d'hydrogène du groupe alkyle étant éventuellement remplacé par un atome d'halogène ou un groupe cyano, et le fragment méthylène du groupe alkyle étant éventuellement remplacé par - O- ou -CO- à condition qu'il n'y ait pas deux atomes d'oxygène directement liés l'un à l'autre.

**3.** Composition polymérisable selon la revendication 1 ou 2, dans laquelle le compose (A) satisfait au moins l'une des conditions (a) et (b) ci-dessous:

Condition (a) : $L^1$ est un groupe représenté par $-(CH_2)_p-$, $-CH=CH-$, $-(CH_2)_pO-$, $-CH=CHCH_2O-$, $-(CH_2)_pCOO-$, $-(CH_2)_pOCO-O-$, ou $-(CH_2)qO(CH_2)_rO-$,
Condition (b): $L^4$ est un groupe représenté par $-(CH_2)_p-$, $-CH=CH-$, $-O(CH_2)_p-$, $-OCH_2CH=CH-$, $-OCO(CH_2)_p-$, $-OCO-O(CH_2)_p-$, ou $-O(CH_2)_qO(CH_2)_r-$,

où p représente un entier de 1 à 8; et q et r représentent chacun indépendamment un entier de 1 à 3.

**4.** Composition polymérisable selon l'une quelconque des revendications 1 à 3, dans laquelle le cycle $A^1$ et le cycle $A^3$ du compose (A) représentent chacun indépendamment un cycle benzène ou un cycle naphtalène.

**5.** Composition polymérisable selon l'une quelconque des revendications 1 à 4, dans laquelle $L^1$ et $L^4$ dans la formule (I) sont asymétriques.

**6.** Composition polymérisable selon l'une quelconque des revendications 1 à 5, comprenant en outre un composé optiquement actif.

**7.** Procédé de production d'un produit durci, comprenant l'utilisation de la composition polymérisable selon l'une quelconque des revendications 1 à 6.

**8.** Produit durci obtenu à partir de la composition polymérisable selon l'une quelconque des revendications 1 à 6.

**9.** Film optique pour afficheurs, comprenant le produit durci selon la revendication 8.

**10.** Composition polymérisable selon l'une quelconque des revendications 1 à 6, comprenant en outre un composé cristal liquide autre que le compose (A) en une quantité de 50 parties en masse ou moins pour 100 parties en masse de la somme des composes (A) et (B).

**11.** Composition polymérisable selon l'une quelconque des revendications 1 à 6, dans laquelle au moins l'un parmi le cycle $A^1$ et le cycle $A^3$ est un cycle naphtalène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002069450 A
- JP 2003315761 A
- JP 2007002065 A
- JP 2009029929 A
- EP 2399942 A1
- JP 2015110728 A
- JP 2015127793 A
- JP 2012236982 A
- WO 2015152153 A1